# EUROPEAN PATENT APPLICATION

(11) **EP 4 773 210 A1**
(43) Date of publication of application: **08.07.2026**
(21) Application number: 25869616.0
(22) Date of filing: 06.03.2025
(51) Int. Cl.: H01M 4/133, H01M 4/1393, H01M 4/62

(54) **ELECTRODE SHEET AND PREPARATION METHOD THEREFOR, AND BATTERY**

(30) Priority: 10.10.2024 CN 202411411800; 10.10.2024 CN 202422448794 U; 10.10.2024 CN 202411411792
(71) Applicant: Eve Energy Co., Ltd., Huizhou, Guangdong 516006 (CN)
(72) Inventor: JIANG, Sipeng, Huizhou, Guangdong 516006 (CN); HU, Xinghui, Huizhou, Guangdong 516006 (CN); BU, Fang, Huizhou, Guangdong 516006 (CN); LV, Xin, Huizhou, Guangdong 516006 (CN)
(74) Representative: Stöckeler, Ferdinand
(86) International application number: PCT/CN2025/081099
(87) International publication number: WO 2026/076878

(57) **Abstract**

The present application provides a pole piece, a preparation method thereof and a battery. The pole piece includes a current collector and a composite layer, and the composite layer is disposed on the current collector. The composite layer includes a first active material layer, and the first active material layer has a first surface away from the current collector. A recess extending from the first surface to inside of the first active material layer is defined on the first active material layer.

## Description

This application claims priority to Chinese Patent Application No. 202411411792.1, 202422448794. X and 202411411800.2 filed with the Chinese Patent Office on October 10, 2024. The disclosures of the aforementioned applications are hereby incorporated by reference in their entireties.

### TECHNICAL FIELD

The present application relates to a technical field of battery manufacturing, and more particularly, to a pole piece, a preparation method thereof, and a battery.

### BACKGROUND

With rapid development of new energy automobile industry, a demand on energy density of lithium-ion batteries is increasing. In related arts, the energy density of the lithium-ion batteries can be improved by increasing a thickness of a pole piece to increase a content of an active substance.

### SUMMARY

However, for lithium-ion batteries, the thicker the pole piece is, the poorer permeability of the electrolyte is. As such, a concentration polarization inside the pole piece of the lithium-ion battery is rapidly increased during the charging and discharging process, causing difficult to migrate lithium ions, so as to limit a rate capacity of the lithium-ion battery to some extent.

The present application provides a pole piece. The pole piece includes a current collector and a composite layer, and the composite layer is disposed on the current collector. The composite layer includes a first active material layer, and the first active material layer has a first surface away from the current collector. A recess extending from the first surface to inside of the first active material layer is defined on the first active material layer.

The present application also provides a preparation method of a pole piece. The preparation method of a pole piece includes: preparing a first active material layer on a current collector, wherein the first active material layer has a first surface away from the current collector, and a recess extending from the first surface to inside of the first active material layer is defined on the first active material layer.

The present application also provides a battery. The battery includes a pole piece as described above or the pole piece prepared by the preparation method of the pole piece as described above.

### BENEFICIAL EFFECT

According to the pole piece provided in the present application, a recess extending from a first surface to an inside of a first active material layer is defined on the first active material layer, so that an electrolyte can rapidly penetrate into a portion of the first active material layer close to a current collector through the recess, thereby reducing a concentration polarization in the pole piece and improving a rate capacity of a battery.

### BRIEF DESCRIPTION OF THE DRAWINGS

FIG. 1 is a first schematic sectional diagram of a pole piece according to an embodiment of the present application;
FIG. 2 is a schematic cross-sectional diagram of a first active material layer of FIG. 1;
FIG. 3 is a schematic sectional diagram of a protective layer of FIG. 1;
FIG. 4 is a second schematic sectional diagram of a pole piece according to an embodiment of the present application;
FIG. 5 is a third schematic sectional diagram of a pole piece according to an embodiment of the present application;
FIG. 6 is a fourth schematic cross-sectional diagram of a pole piece according to an embodiment of the present application;
FIG. 7 is a fifth schematic sectional diagram of a pole piece according to an embodiment of the present application;
FIG. 8 is a sixth schematic cross-sectional diagram of a pole piece according to an embodiment of the present application;
FIG. 9 is a schematic top diagram of a first active material layer in a pole piece according to an embodiment of the present application;
FIG. 10 is a flow chart of a preparation of a pole piece according to an embodiment of the present application;
FIG. 11 is a schematic structural diagram of a battery according to an embodiment of the present application.
FIG. 12 is an SEM diagram of a pole piece provided in Example 8, in which A refers to a first active material layer and B refers to a conductive layer;
FIG. 13 is an enlarged SEM diagram of a frame-line portion in FIG. 12;
FIG. 14 is an SEM diagram of a pole piece provided in Example 1, in which A refers to a first active material layer and B refers to a conductive layer;
FIG. 15 is an enlarged SEM diagram of a frame-line portion in FIG. 14;
FIG. 16 is an SEM diagram of a pole piece provided in Comparative Example 1;
FIG. 17 is a photograph of a surface cleanliness test a sample provided in Example 8 at different stages of preparation, wherein FIG. 17 (a) is a photograph of a surface cleanliness test of a sample before etching of an active material layer, FIG. 17 (b) is a photograph of a surface cleanliness test of a sample after etching an active material layer, and FIG. 17 (c) is a photograph of a surface cleanliness test of a sample after coating a conductive layer;

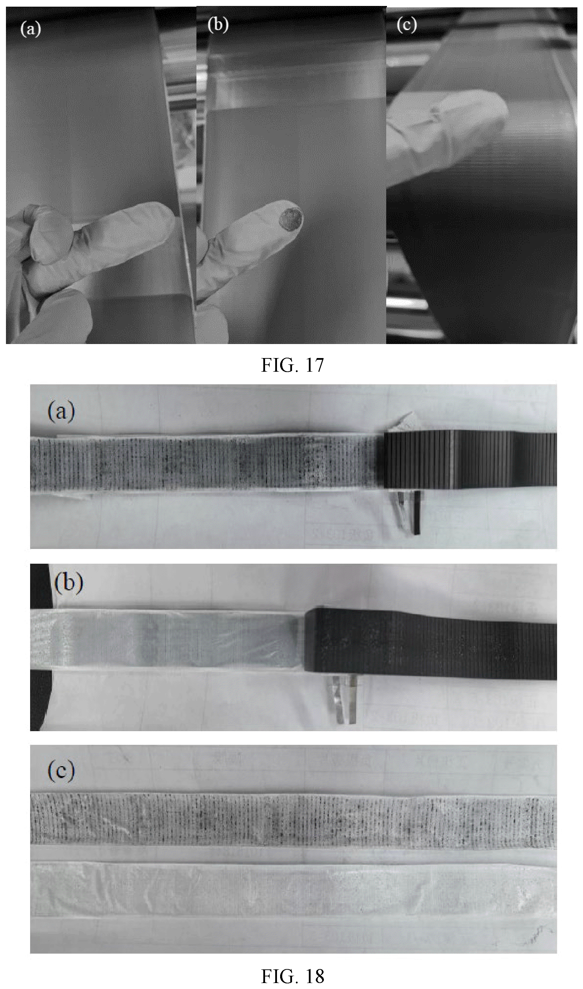

FIG. 18 (a) is a photograph of a pole piece and a separator, wherein the pole piece is provided by Comparative Example 1 and wound with the separator first, and then the pole piece and the separator are separated; FIG. 18 (b) is a photograph of a pole piece and a separator, wherein the pole piece is provided by Comparative Example 8 and wound with the separator first, and then the pole piece and the separator are separated; and FIG. 18 (c) shows an alignment diagram of two separators, wherein the separator on upper side is wound with the pole piece provided in Comparative Example 1, and the separator on lower side is wound with the pole piece provided in Example 8;
FIG. 19 is a photograph of a pole piece provided in Example 8 during a contact angle test, wherein FIG. 19 (a) is a photograph of a preparation stage, FIG. 19(b) is a photograph of a start time, FIG. 19 (c) is a photograph of a middle process, and FIG. 19 (d) is a photograph of a finish time; and
FIG. 20 is a photograph of a pole piece provided in Comparative Example 1 during a contact angle test, wherein FIG. 20 (a) is a photograph of the preparation stage, FIG. 20 (b) is a photograph of a start time, FIG. 20 (c) is a photograph of a middle process, and FIG. 20 (d) is a photograph of a finish time.

### Reference signs illustrate:

10. pole piece; 1. current collector; 2. composite layer; 21. first active material layer; 211. first surface; 212. recess; 2121. laser etching portion; 21a. second wet film layer; 22. protective layer; 221. liquid-absorbing layer; 22a. first wet film layer; 31. receiving groove; 23. second active material layer; 23a. third wet film layer; and 100. battery.

### DETAILED DESCRIPTION OF THE EMBODIMENTS

An example of the present application provides a pole piece, a preparation method of a pole piece, and a battery, and the examples are described in detail below.

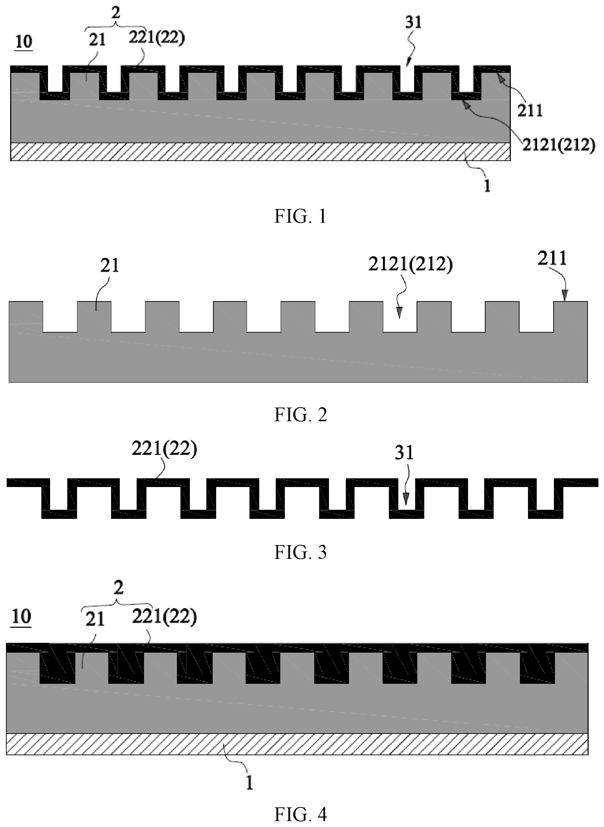

In a first aspect, referring to FIG. 1 to FIG. 9, an embodiment of the present application provides a pole piece 10 including a current collector 1 and a composite layer 2 disposed on the current collector 1. The composite layer 2 includes a first active material layer 21 and a liquid-absorbing layer 221 in sequence along a direction away from the current collector 1.The a first active material layer 21 has a first surface 211 away from the current collector 1, and a recess 212 extending from the first surface 211 to an inside of the first active material layer 21 is defined on the first active material layer 21. The liquid-absorbing layer 221 covers the first surface 211 and an inner surface of the recess 212.

The pole piece 10 may be applied to a battery 100, such as a secondary battery, including, but not limited to, a lithium-ion battery. The pole piece 10 may be a positive pole piece or a negative pole piece. When the pole piece 10 is a positive pole piece, the current collector 1 is a positive pole current collector, and the first active material layer 21 is a positive pole active material layer. When the pole piece 10 is a negative pole piece, the current collector 1 is a negative pole current collector, and the first active material layer 21 is a negative pole active material layer.

If the current collector 1 is a positive current collector, by way of example, the current collector 1 may be an aluminum foil, a carbon coated aluminum foil, a safety undercoated aluminum foil, an etched aluminum foil, or an aluminum mesh. A thickness of the current collector 1 may be 5µm to 20µm, for example, 5µm, 10µm, 15µm, or 20µm.

If the current collector 1 is a negative electrode current collector, as an example, the current collector 1 may be a copper foil having a thickness of 3µm to 20µm, for example, 3µm, 4µm, 4.5µm, 5µm, 5.5µm, 6µm, 6.5µm, 7µm, 8µm, 10µm, 12µm, 14µm, 16µm, 18µm, or 20µm.

The current collector 1 has two side surfaces facing away from each other in the thickness direction of the current collector 1, and the composite layer 2 is provided on the current collector 1. The composite layer 2 may be bonded to one side surface of the current collector 1, or may be bonded to both side surfaces of the current collector 1.

The composite layer 2 includes a first active material layer 21 and a liquid-absorbing layer 221 bonded together, and the first active material layer 21 and the liquid-absorbing layer 221 are sequentially disposed along a direction away from the current collector 1. That is, the first active material layer 21 is located between the current collector 1 and the liquid-absorbing layer 221, and the first active material layer 21 is closer to the current collector 1 than the liquid-absorbing layer 221.

For subsequent ease of differentiation, the side surface of the first active material layer 21 away from the current collector 1 (in other words, close to the liquid-absorbing layer 221) is referred to as the first surface 211.

A side of the first active material layer 21 away from the current collector 1 has a concave-convex structure. Specifically, the first active material layer 21 is provided with a recess 212 which is formed by partially recessing the first active material layer 21 from the first surface 211 to the inside of the first active material layer 21, that is, an opening of the recess 212 is located on the first surface 211 (that is, the opening faces outward). The recess 212 extends toward the inside of the first active material layer 21. In general, the first active material layer 21 is also provided with a portion of positions not being recessed, which is defined as a convex portion, so that the side of the first active material layer 21 away from the current collector 1 presents a concave-convex structure. By way of example, the recess 212 includes at least one of a groove and a through-hole. Alternatively, the recess includes a blind hole. The recess 212 is formed in a manner including, but not limited to, at least one of laser etching, layered coating, and pore-forming agent.

The first active material layer 21 and the liquid-absorbing layer 221 are bonded together, specifically, the liquid-absorbing layer 221 covers the first surface 211 and extends into the recess 212 to cover the inner surface of the recess 212. The liquid-absorbing layer 221 extends into the recess 212, and the liquid-absorbing layer 221 may fill the recess 212. Referring to FIG. 3, for example, the liquid-absorbing layer 221 is more likely to fill the recess 212, or the liquid-absorbing layer 221 is attached to the inner surface of the recess 212 only, and does not completely fill the recess 212, in case that the liquid-absorbing layer 221 is thick or the recess 212 is narrow or the recess 212 is shallow. Referring to FIG. 1, for example, the liquid-absorbing layer 221 is more likely to attach to the inner surface of the recess 212 in case that the liquid-absorbing layer 221 is thin or the recess 212 is wide or the recess 212 is deep. The inner surface of the recess 212 refers to the surface of inner walls of the recess 212, including a bottom wall surface and a side wall surface.

The first active material layer 21 is a layer structure including at least an active material. Alternatively, the first active material layer 21 further includes an adhesive and a conductive agent. For ease of subsequent description, the active material, the adhesive, and the conductive agent in the first active material layer 21 are referred to as the first active material, the second adhesive, and the second conductive agent, respectively. When the types of the first active material layers 21 are different, there is also a difference in the selection of the first active material, the second adhesive, and the second conductive agent contained therein. In some embodiments, the first active material layer 21 may also contain no conductive agent, i.e., no conductive agent is formulated thereto.

If the first active material layer 21 is a positive active material layer and the first active material is a positive active material, as an example, the first active material includes at least one of a nickel cobalt manganese ternary material (NMC), lithium cobalt oxide (LiCoO₂), lithium iron phosphate (LiFePO₄, LFP), lithium manganate (LiMn₂O₄, LMO), and lithium nickel cobalt aluminate (NCA). Also, the second conductive agent is a positive conductive agent, and as an example, the second conductive agent includes at least one of carbon black, conductive graphite, graphene, and carbon nanotubes. Similarly, the second adhesive is a positive electrode adhesive, and the second adhesive includes at least one of organic polymers such as polyacrylic acid (PAA) and polyvinylidene fluoride (PVDF).

If the first active material layer 21 is a negative electrode active material layer, the first active material is a negative electrode active material, and as an example, the first active material includes at least one of graphite, graphene, hard carbon, soft carbon, and a silicon-based material. Also, the second conductive agent is a negative conductive agent, and as an example, the second conductive agent includes at least one of carbon black, graphene, acetylene black, carbon nanotubes, and conductive graphite. Similarly, the second adhesive is a negative electrode adhesive, and as an example, the second adhesive includes styrene butadiene rubber (SBR).

The liquid-absorbing layer 221 refers to a structural layer having a preferable absorption capacity for the electrolyte, and in particular, the capacity on absorbing the electrolyte (liquid-absorbing capacity) of the liquid-absorbing layer 221 is at least superior to that of the first active material layer 21. The amount of electrolyte absorbed per unit volume of material per unit time may be used to indicate the capacity of the material to absorb the electrolyte. Generally, the greater the amount of electrolyte, the better the capacity of the material to absorb the electrolyte. The capacity of the material to absorb the electrolyte may also be indicated by the time it takes for per unit volume of the material to absorb per unit volume of the electrolyte. Generally, the shorter the time, the better the capacity of the material to absorb the electrolyte. For example, the absorption capacity of the liquid-absorbing layer 221 and the first active material layer 21 to the electrolyte can be tested by means of a contact angle test, and generally the time for the electrolyte of the same volume to completely enter the liquid-absorbing layer 221 is shorter than the time for the electrolyte of the same volume to completely enter the first active material layer 21.

An embodiment of the present application provides a pole piece 10 including a current collector 1 and a first active material layer 21. A recess 212 is defined on the first active material layer 21, an opening of the recess 212 is outward but the recess 212 extends inwardly to the first active material layer 21. The pole piece 10 further includes a liquid-absorbing layer 221, and the liquid-absorbing layer 221 is bonded with the first active material layer 21 and covers the first surface 211 of the first active material layer 21 and the inner surface of the recess 212. Compared with the first active material layer 21, the liquid-absorbing layer 221 has a better capacity to absorb an electrolyte, so that the electrolyte can preferentially penetrate into the inside of the first active material layer 21 through a portion of the liquid-absorbing layer 221 with the recess 212, thereby shortening a transport path of lithium ions, improving an infiltration effect of the electrolyte on the pole piece 10, and increasing a probability that the active material particles inside the pole piece 10 are in contact with the electrolyte. Also, the liquid-absorbing layer 221 can store the electrolyte as an electrolyte carrier, so that the electrolyte stored in the liquid-absorbing layer 221 can be rapidly supplied to the first active material layer 21 during the charging and discharging process of the pole piece 10. Therefore, when the liquid-absorbing layer 221 is located on the inner surface of the recess 212, the liquid-absorbing layer 221 is combined with the recess 212 to provide a "fast passage". As such, the electrolyte can rapidly enter the first active material layer 21, thereby promoting the transport of lithium ions in the pole piece 10 and increasing the migration speed of lithium ions, and reducing the concentration polarization inside the pole piece 10.

In some embodiments, in the first active material layer 21, the first active material is in the form of particles, i.e., first active material particles, such that, structurally, the first active material layer 21 includes a first matrix layer having a second adhesive and a second conductive agent, and the first active material particles dispersed in the first matrix layer.

As an example, the liquid-absorbing capacity of the liquid-absorbing layer 221 can be improved by adjusting the composition, structure, and the like.

In some embodiments, referring to FIG. 1, the liquid-absorbing layer 221 is a mixed layer including at least a first adhesive and a first conductive agent.

It should be understood that the liquid-absorbing layer 221 also includes an adhesive and a conductive agent. For ease of description, the adhesive and the conductive agent in the liquid-absorbing layer 221 are referred to as a first adhesive and a first conductive agent, respectively. The liquid-absorbing layer 221 includes a first adhesive that allows the liquid-absorbing layer 221 to be bonded to the first active material layer 21, and a first conductive agent that allows the liquid-absorbing layer 221 to have a certain electrically conductivity, which not only facilitates the current transfer between the liquid-absorbing layer 221 and the first active material layer 21, but also reduces the internal resistance of the pole piece 10. Generally, the conductive agent has a strong capacity to absorb the electrolyte, and the addition of the first conductive agent to the liquid-absorbing layer 221 can also enhance the capacity of the liquid-absorbing layer 221 to soak the electrolyte. The first adhesive and the second adhesive may be the same or different. The first conductive agent and the second conductive agent may be the same or different. As an example, the first adhesive includes at least one of organic polymer materials such as carboxymethylcellulose (CMC), polyacrylic acid (PAA), polyvinylidene fluoride (PVDF), polytetrafluoroethylene (PTFE), and styrene-butadiene rubber (SBR). By way of example, the first conductive agent includes at least one of a conductive carbon material and a conductive ceramic. Alternatively, the conductive carbon material includes at least one of carbon black, carbon nanotubes, carbon fibers, acetylene black, graphite, and graphene. Alternatively, the carbon black includes at least one of conductive carbon black Super P, superconductive carbon black, and Ketjen black. Alternatively, the carbon nanotubes include at least one of single-walled carbon nanotubes (SWCNTs) and multi-walled carbon nanotubes (MWCNTs). Alternatively, the conductive ceramic includes at least one of CaF₂ structures such as β-Al₂O₃, CaO·ZrO₂, and Y₂O₃·ZrO₂. In the liquid-absorbing layer 221, the first adhesive and the first conductive agent are mixed together. The liquid-absorbing layer 221 may include an active material, or may not include an active material. When the liquid-absorbing layer 221 includes an active material, the liquid-absorbing layer 221 is formed as an active material layer. When the liquid-absorbing layer 221 does not contain an active material, the liquid-absorbing layer 221 is formed as a conductive layer.

In some embodiments, the first active material layer 21 is a mixed layer including a first active material, a second adhesive, and a second conductive agent. The first active material in the first active material layer 21 can increase the energy density of the pole piece 10, and the second adhesive can realize bonding of the first active material layer 21 to the current collector 1. The second conductive agent is dispersed in the first active material layer 21 to construct a conductive network to promote ion transport.

In some embodiments, the mass content of the second conductive agent in the first active material layer 21 is less than the mass content of the first conductive agent in the liquid-absorbing layer 221. Generally, the liquid-absorbing capacity of the conductive agent is better than that of the active material, and the liquid-absorbing capacity of the liquid-absorbing layer 221 can be improved by increasing the mass content of the conductive agent (referred to as the first conductive agent) in the liquid-absorbing layer 221.

In some embodiments, the content of the first active material in the first active material layer 21 is greater than 50wt%, while the content of the first conductive agent in the liquid-absorbing layer 221 is greater than 50wt%. It should be appreciated that the content of the second conductive agent in the first active material layer 21 is less than 50wt%, that is, the mass content of the first conductive agent in the liquid-absorbing layer 221 is greater than the mass content of the second conductive agent in the first active material layer 21, so that the liquid-absorbing capacity of the liquid-absorbing layer 221 can be improved. As an example, the content of the first active material in the first active material layer 21 is 50wt%, 60wt%, 70wt%, 80wt%, 85wt%, 90wt%, 92wt%, 94wt%, 95wt%, 96wt%, 97wt%, or 98wt%. As an example, the content of the first conductive agent in the liquid-absorbing layer 221 is 50wt%, 60wt%, 70wt%, 80wt%, 85wt%, 90wt%, 92wt%, 94wt%, 95wt%, 96wt%, 97wt%, 98wt%, or 99wt%.

In some embodiments, the first active material layer 21 includes a first active material, and the first conductive agent has an oil-absorbing value greater than the first active material. Since the electrolyte mainly contains the electrolytic and the organic solvent, the capacity of the liquid-absorbing layer 221 to absorb the electrolyte can be improved by increasing the oil-absorbing value of the first conductive agent in the liquid-absorbing layer 221. That is, the electrolyte is more easily absorbed by the liquid-absorbing layer 221 than the first active material layer 21. Alternatively, the liquid-absorbing layer 221 does not contain an active material or contains a small amount of the active material.

In some embodiments, a porosity of the liquid-absorbing layer 221 is at least greater than a porosity of the first active material layer 21. By increasing the porosity of the liquid-absorbing layer 221, the liquid-absorbing capacity of the liquid-absorbing layer 221 may be improved. In this case, the liquid-absorbing layer 221 may be an active material layer or a conductive layer. When the liquid-absorbing layer 221 is an active material layer, the amount of the active material in the liquid-absorbing layer 221 may be more or less.

When the liquid-absorbing layer 221 also contains an active material, for ease of description, the active material in the liquid-absorbing layer 221 is referred to as a third active material. The third active material may be the same as or different from the first active material. However, the porosity of the liquid-absorbing layer 221 is greater than the porosity of the first active material layer 21. The manner of adjusting the porosity of the liquid-absorbing layer 221 includes, but is not limited to, selecting a material having a lower compaction density, increasing the particle size of the material, reducing the compaction density of the liquid-absorbing layer 221, and the like. For example, when the first active material layer 21 is prepared, the first active material layer 21 is first subjected to a roll pressing process, and the liquid-absorbing layer 221 is prepared without the roll pressing process. Similarly, when the pole piece 10 is a positive pole piece, the liquid-absorbing layer 221 is a positive active material layer; and when the pole piece 10 is a negative pole piece, the liquid-absorbing layer 221 is a negative electrode active material layer. When the types of the liquid-absorbing layer 221 are different, there may be differences in the selection of the third active material contained therein.

If the liquid-absorbing layer 221 is a positive electrode active material layer and the third active material is a positive electrode active material, as an example, the third active material includes at least one of a nickel cobalt manganese ternary material (NMC), lithium cobalt oxide (LiCoO₂), lithium iron phosphate (LiFePO₄, LFP), lithium manganate (LiMn₂O₄, LMO), and lithium nickel cobalt aluminate (NCA). If the liquid-absorbing layer 221 is a negative electrode active material layer, and the third active material is a negative electrode active material, as an example, the third active material includes at least one of graphite, graphene, hard carbon, soft carbon, and a silicon-based material. In some embodiments, when the liquid-absorbing layer 221 is an active material layer, the third active material is in the form of particles, that is, third active material particles. The liquid-absorbing layer 221 structurally includes a third matrix layer having a first adhesive and a first conductive agent, and the third active material particles dispersed in the third matrix layer.

In some embodiments, the recess 212 is a laser etching portion 2121, that is, the recess 212 is obtained by partially irradiating the first active material layer 21 with a laser beam of high energy density, to make the material in the partial region of the first active material layer 21 being vaporized and evaporated in a very short time. The formation of the recess 212 by laser etching is not only efficient, but also easy to control the shape and size of the recess 212. However, the preparation of the recess 212 by means of laser etching causes the surface of the first active material layer 21, in particular the inner surface of the recess 212, to retain micron-sized dust, which is mainly loosened from the first active material and the second conductive agent and the carbonized second adhesive. The micron-sized dust is difficult to remove by the dust removal device. When the pole piece 10 is used to prepare the battery 100, the dust is easily carried into the separator of the battery 100 by the electrolyte, thereby causing the internal short-circuit or self-discharge of the battery 100 to increase. However, in the embodiments of the present application, since the pole piece 10 further includes a liquid-absorbing layer 221, which is bonded to the first active material layer 21 and covers the first surface 211 of the first active material layer 21 and the inner surface of the recess 212, the liquid-absorbing layer 221 can cover the dust remaining on the surface of the first active material layer 21 and block the dust from entering the electrolyte. The adhesive (referred to as the first adhesive) contained in the liquid-absorbing layer 221 can also adhere the dust, especially at the inner surface of the recess 212, and the adhesive can penetrate into the first active material layer 21 in a small amount to form a bonding interface layer between the liquid-absorbing layer 221 and the first active material layer 21. The bonding interface layer not only can solidify a large amount of dust, but also can prevent the loosened material on the side wall of the recess 212 from being further loosened down, thereby reducing amount of the dust from leaving the pole piece 10. The risk of an internal short-circuit or self-discharge of the battery 100 is reduced.

In some embodiments, the first conductive agent has a specific surface area of 1m²/g to 1000m²/g. The specific surface area of the first conductive agent affects the capacity of the liquid-absorbing layer 221 to store the electrolyte. The greater the specific surface area of the first conductive agent, the stronger the capacity of the liquid-absorbing layer 221 to store the electrolyte. As an example, the specific surface area of the first conductive agent is 1m²/g, 10m²/g, 100m²/g, 200m²/g, 300m²/g, 400m²/g, 500m²/g, 600m²/g, 700m²/g, 800m²/g, 900m²/g, or 1000m²/g. Typically, the specific surface of the first conductive agent is related to the topography of the material. By way of example, the first conductive agent includes a conductive carbon material including at least one of carbon black, carbon nanotubes, carbon fibers, graphite, and graphene, wherein the specific surface area of the carbon black is greater than 5m²/g, the specific surface area of the carbon nanotubes is greater than 1m²/g, the specific surface area of the graphene is 1m²/g to 500m²/g, the specific surface area of the graphite is 1m²/g to 1000m²/g, and the specific surface area of the carbon fibers is 1m²/g to 1000m²/g.

In some embodiments, the first conductive agent has a D50 particle size (i.e., average particle size) of 1nm to 50µm. The greater the D50 particle size of the first conductive agent is, the greater the porosity of the liquid-absorbing layer 221 is, so that the liquid-storage space of the liquid-absorbing layer 221 is increased, and the electrolyte is easier to penetrate through the liquid-absorbing layer 221 to the first active material layer 21. However, the oversize of the D50 particle size of the first conductive agent affects the thickness of the liquid-absorbing layer 221, and the oversize of the D50 particle size of the first conductive agent tends to reduce the specific surface area of the first conductive agent. As an example, the D50 particle size of the first conductive agent is 1nm, 5nm, 10nm, 100nm, 200nm, 500nm, 1µm, 5µm, 10µm, 20µm, 30µm, 40µm, or 50µm. By way of example, the first conductive agent includes a conductive carbon material including at least one of carbon black, carbon nanotubes, carbon fibers, graphite, and graphene, wherein the carbon black has a D50 particle size of 1nm to 200nm, the carbon nanotubes have a D50 particle size of 1nm to 100nm, the graphene has a D50 particle size of 1µm to 50µm, the graphite has a D50 particle size of 10nm to 20µm, and the carbon fibers have a D50 particle size of 5nm to 1µm.

In some embodiments, the oil-absorbing value of the first conductive agent is greater than the oil-absorbing value of the first active material.

In some embodiments, the first conductive agent has an oil-absorbing value greater than or equal to 500mL/100g. Generally, the solvent in the electrolyte is an organic solvent, and the oil-absorbing value of the first conductive agent affects the capacity of the liquid-absorbing layer 221 to absorb the electrolyte. By setting the oil-absorbing value of the first conductive agent to be greater than or equal to 500mL/100g, the liquid-absorbing layer 221 can quickly soak the electrolyte, thereby accelerating the electrolyte to enter the inside of the pole piece 10. As an example, the oil-absorbing value of the first conductive agent is 500mL/100g, 1000mL/100g, 1500mL/100g, 2000mL/100g, or 2500mL/100g. By way of example, the first conductive agent includes conductive carbon black having an oil-absorbing value of 1000mL/100g; or the first conductive agent includes carbon nanotubes having an oil-absorbing value of 500mL/100g; or the first conductive agent includes graphene having an oil-absorbing value of 2000mL/100g; or the first conductive agent includes graphite having an oil-absorbing value of 500mL/100g.

In some embodiments, the first conductive agent has a conductivity of 3000S·cm to 12000S·cm. The greater the conductivity of the first conductive agent, the greater the conductivity of the liquid-absorbing layer 221, which advantageously reduces the internal resistance of the battery 100. As an example, the conductivity of the first conductive agent is 3000S·cm, 5000S·cm, 7000S·cm, 9000S·cm, 10000S·cm, or 12000S·cm. By way of example, the first conductive agent includes carbon black having a conductivity of 3000S·cm; or the first conductive agent includes carbon nanotubes having a conductivity of 5000S·cm; or the first conductive agent includes graphene having a conductivity of 12000S·cm; or the first conductive agent includes graphite having a conductivity of 5000S·cm; or, the first conductive agent includes carbon fibers having a conductivity of 5000S·cm.

In some embodiments, the liquid-absorbing layer 221 includes a first conductive agent of 1wt% to 80wt%, a first adhesive of 10wt% to 99wt%, and the liquid-absorbing layer 221 further includes a dispersant 0wt% to 30wt%. That is, the liquid-absorbing layer 221 is a conductive layer, i.e., the liquid-absorbing layer 221 does not include an active material. The liquid-absorbing layer 221 mainly includes a conductive agent and an adhesive, for example, the liquid-absorbing layer 221 includes only a first conductive agent and a first adhesive, or the liquid-absorbing layer 221 includes only a first conductive agent, a first adhesive, and a dispersant. In the above range, the protective layer 3 is a conductive layer, and the liquid-absorbing layer 221 has a preferable liquid-absorbing capacity and a combination stability with the first active material layer 21. In particular, when the concave portion 212 is a laser etching portion 2121, the first adhesive can better penetrate into the active material layer 2 from the inner wall surface of the recess 212, thereby better curing the inner wall of the recess 212, and thereby effectively reducing the floating powder on the pole piece 10. As an example, the content of the first conductive agent is 1wt%, 5wt%, 10wt%, 15wt%, 20wt%, 25wt%, 30wt%, 35wt%, 40wt%, 45wt%, 50wt%, 55wt%, 60wt%, 65wt%, 70wt%, 75wt% or 80wt%. The content of the first adhesive is 10wt%, 20wt%, 30wt%, 40wt%, 50wt%, 60wt%, 70wt%, 80wt%, 90wt% or 99wt%. The content of the dispersant is 0wt%, 5wt%, 10wt%, 15wt%, 20wt%, 25wt% or 30wt%. When the liquid-absorbing layer 221 further includes a dispersant, the dispersant can effectively promote dispersion of the first conductive agent in the first adhesive, particularly when the first conductive agent is a conductive carbon material. Alternatively, the dispersant is at least one of a plasma dispersant, a nonionic dispersant, and a polymeric dispersant. By way of example, the dispersant includes at least one of anhydride, polyvinylpyrrolidone (PVP), sulfate salt, sulfonate salt, poly (N-vinyl acetamide) (PNVA), polyvinyl alcohol (PVA), and polyethylene glycol. In the liquid-absorbing layer 221, the first adhesive, the first conductive agent, and the dispersant are mixed together.

In some embodiments, the liquid-absorbing layer 221 includes the first conductive agent of 58wt% to 75wt%, the first adhesive of 12.5wt% to 30wt%, and the dispersant of 8wt% to 12.5wt%. In the above range, the liquid-absorbing layer 221 has a preferable liquid-absorbing capacity and binding stability, thereby effectively reducing the floating powder on the pole piece 10. As an example, in the protective layer 3, the content of the first conductive agent is 58wt%, 60wt%, 62wt%, 64wt%, 66wt%, 68wt%, 70wt%, 72wt%, 74wt%, or 75wt%. The content of the first adhesive is 12.5wt%, 14wt%, 16wt%, 18wt%, 20wt%, 22wt%, 24wt%, 26wt%, 28wt% or 30wt%. The dispersant content is 8wt%, 9wt%, 10wt%, 11wt%, 12wt% or 12.5wt%.

In some embodiments, the porosity of the liquid-absorbing layer 221 is 5%~99%. The greater the porosity of the liquid-absorbing layer 221, the greater the liquid-storage capacity of the liquid-absorbing layer 221. As an example, the porosity of the liquid-absorbing layer 221 is 5%, 10%, 20%, 30%, 40%, 50%, 60%, 70%, 80%, 90%, or 99%.

In some embodiments, the liquid-absorbing layer 221 has a thickness of 0.2µm to 50µm. Generally, the thicker the thickness of the liquid-absorbing layer 221, the greater the liquid-absorbing amount of the liquid-absorbing layer 221, and the higher the rate capacity of the battery 100. However, too thick the liquid-absorbing layer 221 may cause a decrease in the energy density of the battery 100. As an example, the thickness of the liquid-absorbing layer 221 is 0.2µm, 1µm, 5µm, 10µm, 15µm, 20µm, 25µm, 30µm, 35µm, 40µm, 45µm, or 50µm. Herein, the thickness of the liquid-absorbing layer 221 is an average thickness.

In some embodiments, the liquid-absorbing layer 221 has a thickness of 0.2µm to 10µm. Within this range of the thickness of the liquid-absorbing layer 221, the battery 100 has a preferred rate capacity and energy density. As an example, the thickness of the liquid-absorbing layer 221 is 0.2µm, 0.3µm, 0.4µm, 0.5µm, 1µm, 2µm, 3µm, 4µm, 5µm, 6µm, 7µm, 8µm, 9µm, or 10µm. Herein, the thickness of the liquid-absorbing layer 221 is an average thickness.

In some embodiments, the pole piece 10 is a thick pole piece, wherein the thickness of the first active material layer 21 is greater than 30µm. By increasing the thickness of the first active material layer 21, the content of the active material in the pole piece 10 is increased, thereby increasing the energy density of the battery 100. As an example, the thickness of the first active material layer 21 is 31µm, 40µm, 50µm, 60µm, 70µm, 80µm, 90µm, 100µm, 110µm, 120µm, 130µm, or 150µm.

In some embodiments, the pole piece 10 is a thick pole piece, the composite layer 2 is provided on only one side of the current collector 1, and the thickness of the pole piece 10 is greater than 60µm. As an example, the thickness of the pole piece 10 is 61µm, 70µm, 80µm, 90µm, 100µm, 110µm, 130µm, 150µm, 170µm, 190µm, or 210µm.

In some embodiments, the pole piece 10 is a thick pole piece, but a composite layer 2 is provided on both sides of the current collector 1, and the thickness of the pole piece 10 is greater than 60µm. As an example, the thickness of the pole piece 10 is 61µm, 70µm, 80µm, 90µm, 100µm, 110µm, 120µm, 130µm, 140µm, 150µm, 170µm, 190µm, 210µm, 250µm, 280µm, or 300µm.

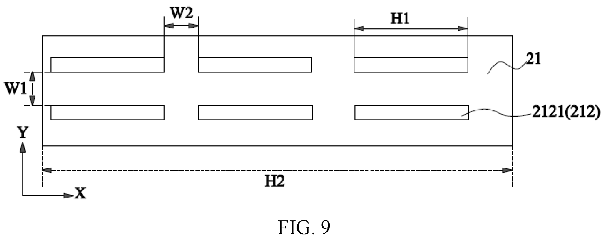

In some embodiments, referring to FIG. 9, the recess 212 is an elongate groove extending in a first direction of the first active material layer 21, the length H1 of the groove extending in the first direction is less than or equal to the length H2 of the first active material layer 21 in the first direction. For example, the first direction may be the transverse direction (TD direction) or the longitudinal direction (MD direction) of the first active material layer 21. By way of example, the first direction is the X direction, the groove extends in the X direction on the first active material layer 21, and the length H1 of the grooves is equal to the length H2 of the first active material layer 21. By way of example, the first direction is the X direction, the groove extends in the X direction on the first active material layer 21, and the length H1 of the groove is less than the length H2 of the first active material layer 21. In other cases, the first direction may also be the Y direction.

In some embodiments, a plurality of recesses 212 is provided, and the plurality of recesses 212 is spaced apart. By increasing the number of the recesses 212 provided on the first active material layer 21, and by distributing the plurality of recesses 212 at intervals, that is, dispersing the plurality of recesses 212 on the first active material layer 21, the liquid-absorbing effect of the first active material layer 21 as a whole is improved, and the concentration polarization inside the pole piece 10 is reduced. Alternatively, a spacing between two adjacent recesses 212 is 0.01mm to 100mm. The spacing between the two adjacent recesses 212 is not desirably too large, otherwise the number of recesses 212 that may be provided per unit area may be reduced. By way of example, the spacing is 0.01mm, 0.1mm, 1mm, 10mm, 20mm, 30mm, 40mm, 50mm, 60mm, 70mm, 80mm, 90mm or 100mm. As an example, referring to FIG. 9, the spacing between the two adjacent recesses 212 may refer to the spacing W1 between the two adjacent recesses 212 in the transverse direction of the first active material layer 21, or may refer to the spacing W2 between the two adjacent recesses 212 in the longitudinal direction of the first active material layer 21.

In some embodiments, a width of the recess 212 does not change or decreases in the direction close to the current collector 1. In this way, the width of the recess 212 at the opening is maximized, which not only facilitates the fabrication of the recess 212 itself, but also facilitates the liquid-absorbing layer 221 to extend into the recess 212 and engage with the inner surface of the recess 212 during the formation of the liquid-absorbing layer 221.

In some embodiments, the side wall of the recess 212 may be a straight wall or may be a curved wall. By way of example, the side wall of the recess 212 is an arc-shaped curved wall. When the side wall of the recess 212 is a straight wall, the side wall of the recess 212 may extend in the thickness direction of the first active material layer 21, or may be inclined with respect to the thickness direction of the first active material layer 21.

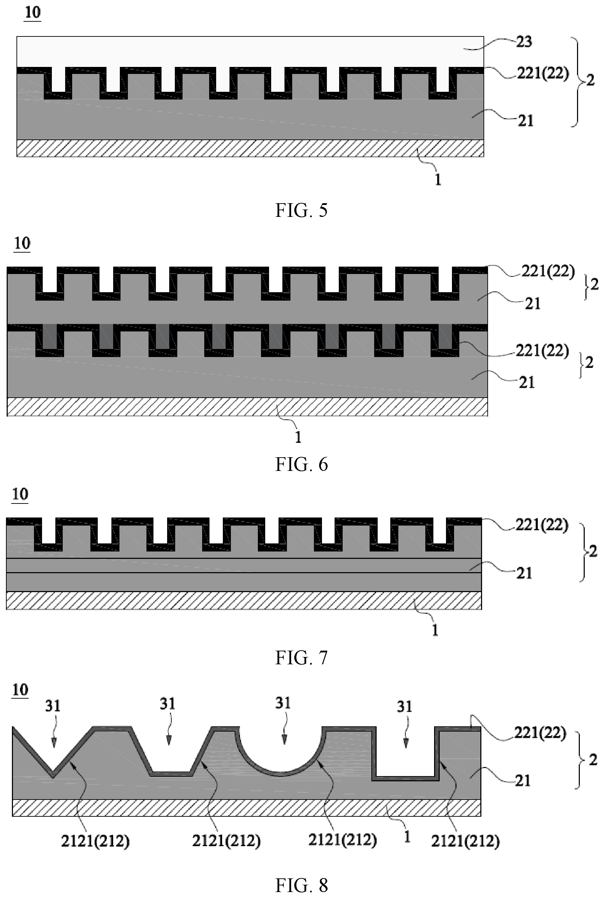

In some embodiments, referring to FIG. 8, the recess 212 is cut in the thickness direction of the first active material layer 21 to present a cross-section of a "V" shape, a trapezoidal shape, a square shape, a semi-circular shape or a semi-elliptical shape.

In some embodiments, the recess 212 has an average width of 1µm to 300µm. The width of the recess 212 should not be too small to allow the liquid-absorbing layer 221 to extend into the recess 212, but should not be too large to allow the recess 212 to be too wide, resulting in an insufficient mass ratio of the first active material layer 21 in the pole piece 10. As an example, the average width of the recess 212 is 1µm, 5µm, 10µm, 50µm, 100µm, 150µm, 200µm, 250µm, or 300µm.

In some embodiments, a depth of the recess 212 is less than the thickness of the first active material layer 21. Generally, in the pole piece 10, the closer the portion of the first active material layer 21 to the current collector 1 is, the farther the portion of the first active material layer 21 from the electrolyte is, and the less easily soaked by the electrolyte which results in the concentration polarization in the pole piece 10. However, the deeper the recess 212, the closer to the current collector 1, as such, the more easily the electrolyte penetrates through the recess 212 into the portion of the first active material layer 21 close to the current collector 1, thereby reducing the concentration polarization in the pole piece 10. Alternatively, the depth of the recess 212 is greater than half the thickness of the first active material layer 21. As an example, the ratio of the depth of the recess 212 to the thickness of the first active material layer 21 is 0.5, 0.6, 0.7, 0.8, 0.9, 0.95, or 0.98.

In some embodiments, in the first active material layer 21, the content of the second conductive agent increases in a direction close to the current collector 1. In the first active material layer 21, the wetting effect of the second conductive agent on the electrolyte is better than that of the first active material layer 21. By increasing the content of the second conductive agent in the portion of the first active material layer 21 close to the current collector 1, it is advantageous to promote the rapid migration of lithium ions to the inside of the first active material layer 21, improve the uniformity of the electrolyte to soak the first active material layer 21, and reduce the concentration polarization inside the first active material layer 21. As an example, referring to FIG. 7, the first active material layer 21 includes a plurality of sub-active material layers arranged in a stacked manner, and the content of the second conductive agent in each sub-active material layer gradually increases in a direction close to the current collector 1.

In some embodiments, in the first active material layer 21, the first active material is in the form of particles, i.e., first active material particles, such that, structurally, the first active material layer 21 is a mixed layer having the first active material particles, a second adhesive, and a second conductive agent. In the first active material layer 21, the average particle size of the first active material particles increases in the direction close to the current collector 1. By increasing the average particle size of the first active material in the portion of the first active material layer 21 close to the current collector 1, the porosity of the portion of the first active material layer 21 close to the current collector 1 can be increased, facilitating the migration of lithium ions through the pores to the inside of the first active material layer 21, improving the uniformity of the electrolyte to soak the first active material layer 21, and reducing the concentration polarization inside the first active material layer 21. As an example, referring to FIG. 7, the first active material layer 21 includes a plurality of sub-active material layers arranged in a stacked manner, and the average particle size of the first active material in each sub-active material layer gradually increases in a direction close to the current collector 1.

In some embodiments, referring to FIG. 5, the composite layer 2 further includes a second active material layer 23 disposed on the surface of the liquid-absorbing layer 221 and facing away from the first active material layer 21.

Specifically, the first active material layer 21, the liquid-absorbing layer 221, and the second active material layer 23 are sequentially distributed in a direction away from the current collector 1, and the liquid-absorbing layer 221 is sandwiched between the first active material layer 21 and the second active material layer 23. Herein, in the case where the liquid-absorbing layer 221 is not filled full of the recess 212, the second active material layer 23 may be partially filled in the recess 212; and in the case where the liquid-absorbing layer 221 is filled full of the recess 212, the second active material layer 23 is laid flatly on one side surface of the liquid-absorbing layer 221.

The second active material layer 23 also includes an active material and an adhesive. For ease of description, the active material and the adhesive in the second active material layer 23 are referred to as the second active material and the third adhesive, that is, the second active material layer 23 is a mixed layer including at least the second active material and the third adhesive. Alternatively, the second active material layer 23 further includes a conductive agent, referred to as a third conductive agent. The second active material and the first active material may be the same or different, the third adhesive and the second adhesive may be the same or different, and the third conductive agent and the second conductive agent may be the same or different. The composition of the second active material layer 23 may be the same as or different from the composition of the first active material layer 21.

Similarly, when the pole piece 10 is a positive pole piece, the second active material layer 23 is a positive active material layer; when the pole piece 10 is a negative pole piece, the second active material layer 23 is a negative active material layer. When the types of the second active material layers 23 are different, there is also a difference in the selection of the second active material, the third adhesive, and the third conductive agent contained therein.

If the second active material layer 23 is a positive active material layer and the second active material is a positive active material, as an example, the second active material includes at least one of a nickel cobalt manganese ternary material (NMC), lithium cobalt oxide (LiCoO₂), lithium iron phosphate (LiFePO₄, LFP), lithium manganate (LiMn₂O₄, LMO), and lithium nickel cobalt aluminate (NCA). Likewise, the third conductive agent is a positive conductive agent, and as an example, the third conductive agent includes at least one of carbon black, conductive graphite, graphene, acetylene black, and carbon nanotubes. Similarly, the third adhesive is a positive electrode adhesive, and the third adhesive includes at least one of organic polymer materials such as polyacrylic acid (PAA) and polyvinylidene fluoride (PVDF).

If the second active material layer 23 is a negative electrode active material layer, the second active material is a negative electrode active material, and as an example, the second active material includes at least one of graphite, graphene, hard carbon, soft carbon, and a silicon-based material. Also, the third conductive agent is a negative conductive agent, and as an example, the third conductive agent includes at least one of carbon black, graphene, acetylene black, carbon nanotubes, and conductive graphite. Similarly, the third adhesive is a negative adhesive, and as an example, the third adhesive includes styrene butadiene rubber (SBR).

In the pole piece 10 provided in the embodiment of the present application, the composite layer 2 includes a first active material layer 21, a liquid-absorbing layer 221, and a second active material layer 23. The first active material layer 21 and the second active material layer 23 serve together as the active material layer, and the liquid-absorbing layer 221 is sandwiched between the first active material layer 21 and the second active material layer 23, which corresponds to that the liquid-absorbing layer 221 is disposed inside the active material layer. In this way, when the pole piece 10 is applied to the battery 100, the electrolyte can be sucked and stored by the soaking capacity of the liquid-absorbing layer 221 when the battery 100 is not operated (for example, when the battery 100 is standing). During charging and discharging of the battery 100, the liquid-absorbing layer 221 can continuously transport the electrolyte to the first active material layer 21 and the second active material layer 23 on both sides thereof as a small electrolyte source, thereby greatly shortening the movement path of lithium ions and reducing the concentration polarization inside the pole piece 10. In addition, adding the second active material layer 23 can also increase the energy density of the battery 100.

In some embodiments, in the second active material layer 23, the second active material is in the form of particles, i.e., second active material particles, such that, structurally, the second active material layer 23 includes a second matrix layer having a third adhesive and a third conductive agent, and the second active material particles dispersed in the second matrix layer.

In some embodiments, referring to FIG. 6, a plurality of composite layers 2 is provided on single side of the current collector 1, and the plurality of composite layers 2 is laminated. By way of example, the number of composite layers 2 on single side of the current collector 1 is 2, 3, 4 or 5 layers. The single side of the current collector 1 refers to one of the opposite sides of the current collector 1. The plurality of the composite layers 2 is provided on one side of the current collector 1, and the other side of the current collector 1 is provided with the composite layer 2 or not. If the other side of the current collector 1 is provided with the composite layer 2, the number of the composite layers 2 may be one or more layers. Herein, the number of the composite layers 2 refers to the number of the composite layers 2 itself, rather than the number of layers of the active material layer and the liquid-absorbing layer 221 inside the composite layer 2. By way of example, the number of the composite layers 2 is 2 layers, it should be understood that, in the case where the composite layer 2 includes only the first active material layer 21 and the liquid-absorbing layer 221, on the single side of the current collector 1, the number of the first active material layers 21 is 2 layers and the number of the liquid-absorbing layers 221 is 2 layers.

In the embodiments of the present application, a plurality of composite layers 2 are stacked on single side of the current collector 1, so that at least a portion of the liquid-absorbing layer 221 is located inside the active material layer in the obtained pole piece 10. The active material layer may include a plurality of first active material layers 21, or may include a plurality of first active material layers 21 and a plurality of second active material layers 23. In this way, when the pole piece 10 is applied to the battery 100, the electrolyte can be sucked and stored by the good soaking capacity of the liquid-absorbing layer 221 when the battery 100 is not operated. The liquid-absorbing layer 221 can continuously transport the electrolyte to the active material layer as a small electrolyte source during charging and discharging of the battery 100, thereby greatly shortening the movement path of lithium ions and reducing the concentration polarization inside the pole piece 10. It is also possible to increase the energy density of the battery 100 by increasing the number of layers of the composite layer 2.

In some embodiments, referring to FIG. 1 to FIG. 9, the pole piece 10 includes a current collector 1, a first active material layer 21, and a protective layer 22.

Herein, the first active material layer 21 is located on the current collector 1, and the first active material layer 21 has a first surface 211 facing away from the current collector 1. The first active material layer 21 is further formed with a laser etching portion 2121 extending from the first surface 211 to the inside of the first active material layer 21.

The protective layer 22 covers the first surface 211 of the first active material layer 21 and the inner surface of the laser etching portion 2121. The protective layer 22 includes a first adhesive, i.e., the protective layer 22 is a layer structure including at least the first adhesive.

The pole piece 10 may be applied to a battery 100, such as a secondary battery, including, but not limited to, a lithium-ion battery. The pole piece 10 may be a positive pole piece or a negative pole piece. When the pole piece 10 is a positive pole piece, the current collector 1 is a positive pole current collector, and the first active material layer 21 is a positive pole first active material layer; When the pole piece 10 is a negative pole piece, the current collector 1 is a negative pole current collector, and the first active material layer 21 is a negative pole first active material layer.

If the current collector 1 is a positive current collector, by way of example, the current collector 1 may be an aluminum foil, a carbon coated aluminum foil, a safety undercoated aluminum foil, an etched aluminum foil, or an aluminum mesh. A thickness of the current collector 1 may be 5µm to 20µm, for example, 5µm, 10µm, 15µm, or 20µm.

If the current collector 1 is a negative electrode current collector, as an example, the current collector 1 may be a copper foil having a thickness of 3µm to 20µm, for example, 3µm, 4µm, 4.5µm, 5µm, 5.5µm, 6µm, 6.5µm, 7µm, 8µm, 10µm, 12µm, 14µm, 16µm, 18µm, or 20µm.

The current collector 1 has two side surfaces facing away from each other in the thickness direction of the current collector 1, and the first active material layer 21 is provided on the current collector 1. The first active material layer 21 may be bonded to one side surface of the current collector 1, or the first active material layer 21 may be bonded to both side surfaces of the current collector 1.

The first active material layer 21 is a layer structure including at least an active material. Alternatively, the first active material layer 21 includes at least the first active material and the second adhesive, in other words, the first active material layer 21 is a mixed layer including at least the first active material and the second adhesive. When the types of the first active material layer 21 are different, there is also a difference in the selection of the first active material and the second adhesive contained therein. Alternatively, the first active material layer 21 further includes a second conductive agent. Certainly, in some embodiments, the first active material layer 21 may also contain no conductive agent, i.e., no conductive agent formulation. The first active material layer 21 includes, as an example, the first active material, the second adhesive, and the second conductive agent.

If the first active material layer 21 is a positive active material layer and the first active material is a positive active material, as an example, the first active material includes at least one of a nickel cobalt manganese ternary material (NMC), lithium cobalt oxide (LiCoO₂), lithium iron phosphate (LiFePO₄, LFP), lithium manganate (LiMn₂O₄, LMO), and lithium nickel cobalt aluminate (NCA). Also, the second conductive agent is a positive conductive agent, and as an example, the second conductive agent includes at least one of carbon black, conductive graphite, graphene, and carbon nanotubes. Similarly, the second adhesive is a positive electrode adhesive, and the second adhesive includes at least one of organic polymers such as polyacrylic acid (PAA) and polyvinylidene fluoride (PVDF).

If the first active material layer 21 is a negative electrode active material layer, the first active material is a negative electrode active material, and as an example, the first active material includes at least one of graphite, graphene, hard carbon, soft carbon, and a silicon-based material. Also, the second conductive agent is a negative conductive agent, and as an example, the second conductive agent includes at least one of carbon black, graphene, acetylene black, carbon nanotubes, and conductive graphite. Similarly, the second adhesive is a negative electrode adhesive, and as an example, the second adhesive includes styrene butadiene rubber (SBR).

For ease of differentiation, the side surface of the first active material layer 21 facing away from the current collector 1 is referred to as the first surface 211. The side of the first active material layer 21 away from the current collector 1 has a concave-convex structure. Specifically, the first active material layer 21 is provided with a laser etching portion 2121 which extends from the first surface 211 to the inside of the first active material layer 21, and an opening of the laser etching portion 2121 is located on the first surface 211 (that is, the opening faces outward). As an example, the laser etching portion 2121 may extend in the thickness direction of the first active material layer 21, and the depth of the laser etching portion 2121 is less than or equal to the thickness of the first active material layer 21. In general, the first active material layer 21 is also provided with apart of positions not being recessed, which is defined as a convex portion, so that the side of the first active material layer 21 away from the current collector 1 presents a concave-convex structure.

The laser etching portion 2121 is configured to locally irradiate the first active material layer 21 with a laser beam of high energy density, so that the material in the local area of the first active material layer 21 is vaporized and evaporated in a very short time to obtain a concave structure. As an example, the laser etching portion 2121 includes at least one of a groove and a through-hole. Alternatively, the recess includes a blind hole. The laser etching portion 2121 is prepared by laser etching, which is not only efficient, but also easy to control the shape and size of the laser etching portion 2121. The number of laser etching portions 2121 on the first active material layer 21 may be one or more.

The first active material layer 21 covers the first surface 211, i.e. the protective layer 22 is located on the side of the first active material layer 21 facing away from the current collector 1. It should be appreciated that the first active material layer 21 and the protective layer 22 are sequentially distributed in the direction away from the current collector 1, the first active material layer 21 is located between the current collector 1 and the protective layer 22, and the first active material layer 21 is closer to the current collector 1 than the protective layer 22.

The protective layer 22 also covers the inner surface of the laser etching portion 2121, it should be understood that the protective layer 22 also extends into the laser etching portion 2121 and covers the surface of inner walls of the laser etching portion 2121, which includes a bottom wall surface and a side wall surface.

The protective layer 22 includes a first adhesive, that is, the first adhesive may enable the protective layer 22 and the first active material layer 21 to be bonded together. Herein, the first adhesive and the second adhesive may be the same or different. As an example, the first adhesive includes at least one of organic polymer materials such as carboxymethylcellulose (CMC), polyacrylic acid (PAA), polyvinylidene fluoride (PVDF), polytetrafluoroethylene (PTFE), and styrene-butadiene rubber (SBR).

In the embodiment of the present application, the pole piece 10 includes a current collector 1 and a first active material layer 21 disposed on the current collector 1. The first active material layer 21 is provided with a laser etching portion 2121 prepared by a laser etching process. Further, the pole piece 10 further includes a protective layer 22, which covers a first surface 211 of the first active material layer 21 and an inner surface of the laser etching portion 2121. The protective layer 22 covers the dust remaining on the surface of the first active material layer 21 and blocks the dust from entering into the electrolyte. The first adhesive contained in the protective layer 22 also adheres the dust, especially at the inner surface of the laser etching portion 2121, and the first adhesive can penetrate into the first active material layer 21 in a small amount to form a bonding interface layer (not shown) between the protective layer 22 and the first active material layer 21. The bonding interface layer not only can solidify a large amount of dust, but also can prevent the loosened material on the side wall of the laser etching portion 2121 from being further loosened, thereby reducing amount of the dust from leaving the pole piece 10. The risk of an internal short-circuit or self-discharge of the battery 100 is reduced.

In some embodiments, the protective layer 22 further includes a first conductive agent. The first conductive agent may render the protective layer 22 electrically conductive, thus not only facilitating the transfer of electrical current between the protective layer 22 and the first active material layer 21, but also reducing the internal resistance of the pole piece 10. Generally, the capacity of the conductive agent to absorb the electrolyte is also relatively strong, and the addition of the first conductive agent to the protective layer 22 can also enhance the capacity of the protective layer 22 to soak the electrolyte. The first conductive agent and the second conductive agent may be the same or different. By way of example, the first conductive agent includes at least one of a conductive carbon material and a conductive ceramic. Alternatively, the conductive carbon material includes at least one of carbon black, carbon nanotubes, carbon fibers, acetylene black, graphite, and graphene. Alternatively, the carbon black includes at least one of conductive carbon black Super P, superconductive carbon black, and Ketjen black. Alternatively, the carbon nanotubes include at least one of single-walled carbon nanotubes (SWCNTs) and multi-walled carbon nanotubes (MWCNTs). Alternatively, the conductive ceramic includes at least one of CaF₂ structures such as β-Al₂O₃, CaO·ZrO₂, and Y₂O₃·ZrO₂. In the protective layer 22, the first adhesive and the first conductive agent are mixed together.

In some embodiments, referring to FIG. 1 to FIG. 3, and FIG. 8, the protective layer 22 accommodates the laser etching portion 2121 and defines a receiving groove 31, a notch of the receiving groove 31 is located on the side of the protective layer 22 facing away from the first active material layer 21. That is, the protective layer 22 extends into the laser etching portion 2121 but is not filled full of the laser etching portion 2121. The protective layer 22 is fitted to the inner side wall of the laser etching portion 2121, and is bent and extended. The receiving groove 31 is formed corresponding to the bent region of the protective layer 22. The receiving groove 31 corresponds to the laser etching portion 2121 and is located in the laser etching portion 2121. In this case, the protective layer 22 is generally relatively thin or the laser etching portion 2121 is relatively wide.

By providing the receiving groove 31, the distance between the protective layer 22 and the current collector 1 is shortened, and the opening of the receiving groove 31 faces the side away from the current collector 1. When the pole piece 10 is applied to the battery 100, the electrolyte can rapidly penetrate into the inside of the first active material layer 21 through the receiving groove 31, thereby relieving the concentration polarization inside the pole piece 10.

In some embodiments, referring to FIG. 1, a plurality of laser etching portions 2121 is provided, the plurality of laser etching portions 2121 is spaced apart on the first active material layer 21, and the receiving groove 31 and the laser etching portion 2121 are disposed one-to-one. That is, the number of the receiving groove s 31 is equal to the number of the laser etching portions 2121, and a plurality of the receiving grooves 31 is provided. Alternatively, the plurality of laser etching portions 2121 is distributed on the first active material layer 21 at equal intervals. By providing the plurality of laser etching portions 2121 and the plurality of the receiving grooves 31, it is possible to improve the uniformity of the first active material layer 2 on soaking the electrolyte.

In some embodiments, where a receiving groove 31 is defined on the protective layer 22, the protective layer 22 may also include a third active material. That is, the protective layer 22 includes at least a first adhesive and a third active material. By adding the third active material to the protective layer 22, the energy density of the pole piece 10 is increased. Herein, the third active material and the first active material may be the same or different. Optionally, the protective layer 22 further includes a first conductive agent.

It should be noted that the selection of the third active material is related to the type of the pole piece 10, and when the pole piece 10 is a positive pole piece, the third active material is a positive active material; and when the pole piece 10 is a negative pole piece, the third active material is a negative pole active material.

If the third active material is a positive electrode active material, as an example, the third active material includes at least one of a nickel cobalt manganese ternary material (NMC), lithium cobalt oxide (LiCoO₂), lithium iron phosphate (LiFePO₄, LFP), lithium manganate (LiMn₂O₄, LMO), and lithium nickel cobalt aluminate (NCA). If the third active material is a negative electrode active material, as an example, the third active material includes at least one of graphite, graphene, hard carbon, soft carbon, and a silicon-based material.

In the case where the receiving groove 31 is defined on the protective layer 22, it is possible to promote the electrolyte to soak the first active material layer 21 by the receiving groove 31, so that the capacity on absorbing the electrolyte (liquid-absorbing capacity) of the protective layer 22 may be superior to the capacity absorbing the electrolyte of the first active material layer 21, or may be inferior to the capacity absorbing the electrolyte of the first active material layer 21. By way of example, the protective layer 22 may be a conductive layer, i.e., the protective layer 22 includes a first conductive agent and a first adhesive, but does not include an active material; The protective layer 22 may also be a first active material layer, i.e. the protective layer 22 further includes an active material. For example, the protective layer 22 may have the same composition as the first active material layer 21.

In addition to providing the receiving groove 31, it is also possible to increase the rate at which the electrolyte infiltrates the first active material layer 21 by increasing the liquid-absorbing capacity of the protective layer 22. The amount of electrolyte absorbed per unit volume of material per unit time may be used to indicate the capacity of the material to absorb the electrolyte. Generally, the greater the amount of electrolyte, the better the capacity of the material to absorb the electrolyte. The capacity of the material to absorb the electrolyte may also be indicated by the time it takes for per unit volume of the material to absorb per unit volume of the electrolyte . Generally, the shorter the time, the better the capacity of the material to absorb the electrolyte. For example, the absorption capacity of the protective layer 22 and the first active material layer 21 to the electrolyte can be tested by means of a contact angle test, and generally the time for the electrolyte of the same volume to completely enter the protective layer 22 is shorter than the time for the electrolyte of the same volume to completely enter the first active material layer 21.

In some embodiments, the protective layer 22 is a liquid-absorbing layer 221, i.e., the protective layer 22 has a superior capacity to absorb electrolyte than the first active material layer 21. That is, the electrolyte is more likely to soak the protective layer 22 than the first active material layer 21. When the protective layer 22 extends into the laser etching portion 2121, the electrolyte may enter the first active material layer 21 preferentially through a portion of the protective layer 22 located in the laser etching portion 2121, thereby shortening a path for the electrolyte to enter the inside of the first active material layer 21, increasing the rate of the first active material layer 21 to soak the electrolyte, and relieving concentration polarization inside the pole piece 10. In this case, the protective layer 22 extends into the laser etching portion 2121. The protective layer 22 may be filled full of the laser etching portion 2121, or may be not filled full of the laser etching portion 2121. Alternatively, the protective layer 22 is provided with a receiving groove 31, and receiving groove 31 is in combination with the protective layer 22, which can further increase the rate of the first active material layer 21 to soak the electrolyte.

In addition, by increasing the liquid-absorbing capacity of the protective layer 22, the protective layer 22 can also store an electrolyte as an electrolyte carrier. As such, the electrolyte stored in the protective layer 22 can be rapidly supplied to the first active material layer 21 during the charging and discharging process of the pole piece 10, and in particular, the electrolyte stored in a portion of the protective layer 22 located at the inner surface of the laser etching portion 2121 can be rapidly introduced into the first active material layer 21, thereby promoting lithium ion transport in the pole piece 10 and increasing the migration speed of lithium ions, and reducing the concentration polarization inside the pole piece 10.

In some embodiments, the porosity of the protective layer 22 is greater than the porosity of the first active material layer 21. The capacity of the protective layer 22 to absorb the electrolyte can be enhanced by increasing the porosity of the protective layer 22, that is, the resistance of the electrolyte flowing in the protective layer 22 is less than the resistance of the electrolyte flowing in the first active material layer 21. Certainly, the manner of adjusting the porosity of the protective layer 22 includes, but is not limited to, selecting a material having a lower compaction density, increasing the particle size of the material, decreasing the compaction density of the protective layer 22, and the like. For example, when the first active material layer 21 is prepared, the first active material layer 21 is first subjected to a roll-pressing process, and the protective layer 22 is prepared without the roll-pressing process. In this case, the protective layer 22 may or may not include the third active material. Alternatively, the protective layer 22 includes the third active material having an average particle size greater than the average particle size of the first active material.

In some embodiments, the first active material layer 21 includes the first active material, the first conductive agent having the oil-absorbing value greater than the oil-absorbing value of the first active material. Since the electrolyte mainly contains the electrolytic and the organic solvent, the capacity of the protective layer 22 to absorb the electrolyte can be enhanced by increasing the oil-absorbing value of the first conductive agent in the protective layer 22, that is, the electrolyte is more easily absorbed by the protective layer 22 than the first active material layer 21. Alternatively, the protective layer 22 does not contain the third active material or contains a small amount of the third active material.

In some embodiments, the first active material layer 21 further includes the second conductive agent, and the mass content of the first conductive agent in the protective layer 22 is greater than the mass content of the second conductive agent in the first active material layer 21, i.e., the content of the conductive agent in the protective layer 22 is higher than the content of the conductive agent in the first active material layer 21. Generally, the conductive agent has a preferable capacity for absorbing the electrolyte, and the liquid-absorbing capacity of the protective layer 22 can be improved by increasing the mass content of the conductive agent (referred to as the first conductive agent) in the protective layer 22. Alternatively, the protective layer 22 does not contain the third active material or contains a small amount of the third active material.

In some embodiments, the first active material layer 21 includes the first active material, the content of the first active material in the first active material layer 21 is greater than 50wt%, while the content of the first conductive agent in the protective layer 22 is greater than50wt%. It should be appreciated that the first active material layer 21 does not contain the second conductive agent or the content of the second conductive agent in the first active material layer 21 is less than 50wt%. That is, the mass content of the first conductive agent in the protective layer 22 is greater than the mass content of the second conductive agent in the first active material layer 21, so that the liquid-absorbing capacity of the protective layer 22 can be improved. As an example, the content of the first active material in the first active material layer 21 is 50wt%, 60wt%, 70wt%, 80wt%, 85wt%, 90wt%, 92wt%, 94wt%, 95wt%, 96wt%, 97wt%, or 98wt%. As an example, the content of the first conductive agent in the protective layer 22 is 50wt%, 60wt%, 70wt%, 80wt%, 85wt%, 90wt%, 92wt%, 94wt%, 95wt%, 96wt%, 97wt%, 98wt%, or 99wt%.

In some embodiments, the protective layer 22 includes the first conductive agent of 1wt% to 80wt%, the first adhesive of 10wt% to 99wt%, and the dispersant of 0wt% to 30wt%. That is, the protective layer 22 is a conductive layer, i.e., the protective layer 22 does not contain an active material, and the protective layer 22 mainly includes a conductive agent and an adhesive, for example, the protective layer 22 includes only the first conductive agent and the first adhesive, or the protective layer 22 includes only the first conductive agent, the first adhesive agent and the dispersant. In the case where the protective layer 22 is a conductive layer, the protective layer 22 can absorb the electrolyte better than the first active material layer 21 including the first active material and the second adhesive. In addition, the stability of the combination of the protective layer 22 and the first active material layer 21 is improved, and in particular, the first adhesive can better penetrate into the first active material layer 21 from the inner wall surface of the laser etching portion 2121, thereby better curing the inner wall of the laser etching portion 2121, and reducing the floating powders on the pole piece 10. As an example, in the protective layer 22, the content of the first conductive agent is 1wt%, 5wt%, 10wt%, 15wt%, 20wt%, 25wt%, 30wt%, 35wt%, 40wt%, 45wt%, 50wt%, 55wt%, 60wt%, 65wt%, 70wt%, 75wt%, or 80wt%. The content of the first adhesive is 10wt%, 20wt%, 30wt%, 40wt%, 50wt%, 60wt%, 70wt%, 80wt%, 90wt% or 99wt%; The content of the dispersant is 0wt%, 5wt%, 10wt%, 15wt%, 20wt%, 25wt% or 30wt%. When the protective layer 22 further includes the dispersant, the dispersant is effective to promote dispersion of the first conductive agent in the first adhesive, particularly when the first conductive agent is a conductive carbon material. Alternatively, the dispersant is at least one of a plasma dispersant, a nonionic dispersant, and a polymeric dispersant. By way of example, the dispersant includes at least one of anhydride, polyvinylpyrrolidone (PVP), sulfate salt, sulfonate salt, poly (N-vinyl acetamide) (PNVA), polyvinyl alcohol (PVA), and polyethylene glycol. In the protective layer 22, the first adhesive, the first conductive agent, and the dispersant are mixed together.

In some embodiments, the protective layer 22 includes the first conductive agent of 58wt% to 75wt%, the first adhesive of 12.5wt% to 30wt%, and the dispersant of 8wt% to 12.5wt%. In the above range, the protective layer 22 has a preferable liquid-absorbing capacity and binding stability, thereby effectively reducing the floating powder on the pole piece 10. As an example, in the protective layer 22, the content of the first conductive agent is 58wt%, 60wt%, 62wt%, 64wt%, 66wt%, 68wt%, 70wt%, 72wt%, 74wt%, or 75wt%. The content of the first adhesive is 12.5wt%, 14wt%, 16wt%, 18wt%, 20wt%, 22wt%, 24wt%, 26wt%, 28wt% or 30wt%. The dispersant content is 8wt%, 9wt%, 10wt%, 11wt%, 12wt% or 12.5wt%.

In some embodiments, the first conductive agent has a specific surface area of 1m²/g to 1000m²/g. The specific surface area of the first conductive agent affects the capacity of the protective layer 22 to store electrolyte. The greater the specific surface area of the first conductive agent, the stronger the capacity of the protective layer 22 to store electrolyte. As an example, the specific surface area of the first conductive agent is 1m²/g, 10m²/g, 100m²/g, 200m²/g, 300m²/g, 400m²/g, 500m²/g, 600m²/g, 700m²/g, 800m²/g, 900m²/g, or 1000m²/g. Typically, the specific surface of the first conductive agent is related to the topography of the material. By way of example, the first conductive agent includes a conductive carbon material including at least one of carbon black, carbon nanotubes, carbon fibers, graphite, and graphene, wherein the specific surface area of the carbon black is greater than 5m²/g, the specific surface area of the carbon nanotubes is greater than 1m²/g, the specific surface area of the graphene is 1m²/g to 500m²/g, the specific surface area of the graphite is 1m²/g to 1000m²/g, and the specific surface area of the carbon fibers is 1m²/g to 1000m²/g.

In some embodiments, the first conductive agent has a D50 particle size (i.e., average particle size) of 1nm to 50µm. The greater the D50 particle size of the first conductive agent is, the greater the porosity of the protective layer 22 is, so that the liquid-storage space of the protective layer 22 is increased, and the electrolyte is easier penetrated through the protective layer 22 to the first active material layer 21. However, the oversize of the D50 particle size of the first conductive agent affects the thickness of the protective layer 22, and the oversize of the D50 particle size of the first conductive agent tends to reduce the specific surface area of the first conductive agent. As an example, the D50 particle size of the first conductive agent is 1nm, 5nm, 10nm, 100nm, 200nm, 500nm, 1µm, 5µm, 10µm, 20µm, 30µm, 40µm, or 50µm . By way of example, the first conductive agent includes a conductive carbon material including at least one of carbon black, carbon nanotubes, carbon fibers, graphite, and graphene, wherein the carbon black has a D50 particle size of 1nm to 200nm, the carbon nanotubes have a D50 particle size of 1nm to 100nm, the graphene has a D50 particle size of 1µm to 50µm, the graphite has a D50 particle size of 10nm to 20µm, and the carbon fibers have a D50 particle size of 5nm to 1µm.

In some embodiments, the first conductive agent has an oil-absorbing value greater than or equal to 500mL/100g. Generally, the solvent in the electrolyte is an organic solvent, and the oil-absorbing value of the first conductive agent affects the capacity of the protective layer 22 to absorb the electrolyte. By setting the oil-absorbing value of the first conductive agent to be greater than or equal to 500mL/100g, the protective layer 22 can quickly soak the electrolyte, thereby accelerating the electrolyte to enter the inside of the pole piece 10. As an example, the oil-absorbing value of the first conductive agent is 500mL/100g, 1000mL/100g, 1500mL/100g, 2000mL/100g, or 2500mL/100g. By way of example, the first conductive agent includes conductive carbon black having an oil-absorbing value of 1000mL/100g; or the first conductive agent includes carbon nanotubes having an oil-absorbing value of 500mL/100g; or the first conductive agent includes graphene having an oil-absorbing value of 2000mL/100g; or the first conductive agent includes graphite having an oil-absorbing value of 500mL/100g.

In some embodiments, the first conductive agent has a conductivity of 3000S·cm to 12000S·cm. The greater the conductivity of the first conductive agent, the greater the conductivity of the protective layer 22, which advantageously reduces the internal resistance of the battery 100. As an example, the conductivity of the first conductive agent is 3000S·cm, 5000S·cm, 7000S·cm, 9000S·cm, 10000S·cm, or 12000S·cm. By way of example, the first conductive agent includes carbon black having a conductivity of 3000S·cm; or the first conductive agent includes carbon nanotubes having a conductivity of 5000S·cm; or the first conductive agent includes graphene having a conductivity of 12000S·cm; or the first conductive agent includes graphite having a conductivity of 5000S·cm; or, the first conductive agent includes carbon fibers having a conductivity of 5000S·cm.

In some embodiments, the porosity of the protective layer 22 is 5%~99%. The greater the porosity of the protective layer 22, the greater the liquid-storage capacity of the protective layer 22. As an example, the porosity of the liquid-absorbing layer 221 is 5%, 10%, 20%, 30%, 40%, 50%, 60%, 70%, 80%, 90%, or 99%.

In some embodiments, the protective layer 22 has a thickness of 0.2µm~50µm. Generally, the thicker the thickness of the protective layer 22, the better effect on covering the floating powders by the protective layer 22. However, too thick the protective layer 22 may cause to an increase in the resistance of the electrolyte to soak the pole piece 10 and a decrease in the rate capacity of the battery 100. As an example, the thickness of the protective layer 22 is 0.2µm, 1µm, 5µm, 10µm, 15µm, 20µm, 25µm, 30µm, 35µm, 40µm, 45µm, or 50µm. Herein, the thickness of the protective layer 22 is an average thickness.

In some embodiments, the protective layer 22 has a thickness of 0.2µm to 10µm. Within this range of the thickness of the protective layer 22, the battery 100 has a preferred rate capacity and a better effect on covering the floating powders. As an example, the thickness of the protective layer 22 is 0.2µm, 0.3µm, 0.4µm, 0.5µm, 1µm, 2µm, 3µm, 4µm, 5µm, 6µm, 7µm, 8µm, 9µm, or 10µm. Herein, the thickness of the protective layer 22 is an average thickness.

In some embodiments, the pole piece 10 is a thick pole piece, wherein the thickness of the first active material layer 21 is greater than 30µm. By increasing the thickness of the first active material layer 21, the content of the active material in the pole piece 10 is increased, thereby increasing the energy density of the battery 100. As an example, the thickness of the first active material layer 21 is 31µm, 40µm, 50µm, 60µm, 70µm, 80µm, 90µm, 100µm, 110µm, 120µm, 130µm, or 150µm.

In some embodiments, the pole piece 10 is a thick pole piece, and the thickness of the pole piece 10 is greater than 60µm. As an example, the thickness of the pole piece 10 is 61µm, 70µm, 80µm, 90µm, 100µm, 110µm, 120µm, 130µm, 140µm, 150µm, 170µm, 190µm, 210µm, 250µm, 280µm, or 300µm.

In some embodiments, referring to FIG. 9, the laser etching portion 2121 includes an elongated groove extending in a first direction of the first active material layer 21, the length H1 of the groove extending in the first direction is less than or equal to the length H2 of the first active material layer 21 in the first direction. For example, the first direction may be the transverse direction (TD direction) or the longitudinal direction (MD direction) of the first active material layer 21. By way of example, the first direction is the X direction, the groove extends in the X direction on the first active material layer 21, and the length H1 of the grooves is equal to the length H2 of the first active material layer 21. By way of example, the first direction is the X direction, the groove extends in the X direction on the first active material layer 21, and the length H1 of the groove is less than the length H2 of the first active material layer 21. In other cases, the first direction may also be the Y direction.

In some embodiments, a plurality of laser etching portions 2121 is provided, and the plurality of laser etching portions 2121 is spaced apart. By increasing the number of the laser etching portions 2121 provided on the first active material layer 21, and by distributing the plurality of laser etching portions 2121 at intervals, that is, dispersing the plurality of laser etching portions 2121 on the first active material layer 21, the uniformity and the rate of the electrolyte to soak the first active material layer 21 as a whole is improved, and the concentration polarization inside the pole piece 10 is reduced. Alternatively, a spacing between two adjacent laser etching portions 2121 is 0.01mm to 100mm. The spacing between the two adjacent laser etching portions 2121 is not desirably too large, otherwise the number of laser etching portions 2121 that may be provided per unit area may be reduced. By way of example, the spacing is 0.01mm, 0.1mm, 1mm, 10mm, 20mm, 30mm, 40mm, 50mm, 60mm, 70mm, 80mm, 90mm or 100mm. As an example, referring to FIG. 9, the spacing between the two adjacent laser etching portions 2121 may refer to the spacing W1 between the two adjacent laser etching portions 2121 in the transverse direction of the first active material layer 21, or may refer to the spacing W2 between the two adjacent laser etching portions 2121 in the longitudinal direction of the first active material layer 21.

In some embodiments, referring to FIG. 8, a width of the laser etching portion 2121 does not change or decreases in the direction close to the current collector 1. In this way, the width of the laser etching portion 2121 at the opening is maximized, which not only facilitates the fabrication of the laser etching portion 2121 itself, but also facilitates the protective layer 22 to extend into the laser etching portion 2121 and engage with the inner surface of the laser etching portion 2121 during the formation of the protective layer 22.

In some embodiments, referring to FIG. 8, the side wall of the laser etching portion 2121 may be a straight wall or may be a curved wall. By way of example, the side wall of the laser etching portion 2121 is an arc-shaped curved wall. When the side wall of the laser etching portion 2121 is a straight wall, the side wall of the laser etching portion 2121 may extend in the thickness direction of the first active material layer 21, or may be inclined with respect to the thickness direction of the first active material layer 21.

In some embodiments, referring to FIG. 8, the laser etching portion 2121 is cut along the thickness direction of the first active material layer 21 to present a cross-section of a "V" shape, a trapezoidal shape, a square shape, a semi-circular shape or a semi-elliptical shape.

In some embodiments, the laser etching portion 2121 has an average width of 1µm to 300µm. The width of the laser etching portion 2121 should not be too small to allow the protective 22 to extend into the laser etching portion 2121, but should not be too large to allow the laser etching portion 2121 to be too wide, resulting in an insufficient mass ratio of the first active material layer 21 in the pole piece 10. As an example, the average width of the laser etching portion 2121 is 1µm, 5µm, 10µm, 50µm, 100µm, 150µm, 200µm, 250µm, or 300µm.

In some embodiments, a depth of the laser etching portion 2121 is less than the thickness of the first active material layer 21. Generally, in the pole piece 10, the closer the portion of the first active material layer 21 to the current collector 1 is, the farther the portion of the first active material layer 21 from the electrolyte is, and the less easily soaked by the electrolyte which results in the concentration polarization in the pole piece 10. However, the deeper the laser etching portion 2121, the closer to the current collector 1, as such, the more easily the electrolyte penetrates through the laser etching portion 2121 into the portion of the first active material layer 21 close to the current collector 1, thereby reducing the concentration polarization in the pole piece 10. Alternatively, the depth of the laser etching portion 2121 is greater than half the thickness of the first active material layer 21. As an example, the ratio of the depth of the laser etching portion 2121 to the thickness of the first active material layer 21 is 0.5, 0.6, 0.7, 0.8, 0.9, 0.95, or 0.98.

In some embodiments, the first active material layer 21 includes the second conductive agent, and in the first active material layer 21, the content of the second conductive agent increases in a direction close to the current collector 1. In the first active material layer 21, the wetting effect of the second conductive agent on the electrolyte is better than that of the first active material layer 21. By increasing the content of the second conductive agent in the portion of the first active material layer 21 close to the current collector 1, it is advantageous to promote the rapid migration of lithium ions to the inside of the first active material layer 21, improve the uniformity of the electrolyte to soak the first active material layer 21, and reduce the concentration polarization inside the first active material layer 21. As an example, referring to FIG. 7, the first active material layer 21 includes a plurality of sub-first active material layers arranged in a stacked manner, and the content of the second conductive agent in each sub-first active material layer gradually increases in a direction close to the current collector 1.

In some embodiments, the first active material layer 21 includes the first active material, and the first active material is in the form of particles. In the first active material layer 21, the average particle size of the first active material particles increases in the direction close to the current collector 1. By increasing the average particle size of the first active material in the portion of the first active material layer 21 close to the current collector 1, the porosity of the portion of the first active material layer 21 close to the current collector 1 can be increased, facilitating the migration of lithium ions through the pores to the inside of the first active material layer 21, improving the uniformity of the electrolyte to soak the first active material layer 21, and reducing the concentration polarization inside the first active material layer 21. As an example, referring to FIG. 7, the first active material layer 21 includes a plurality of sub-active material layers arranged in a stacked manner, and the average particle size of the first active material in each sub-active material layer gradually increases in a direction close to the current collector 1.

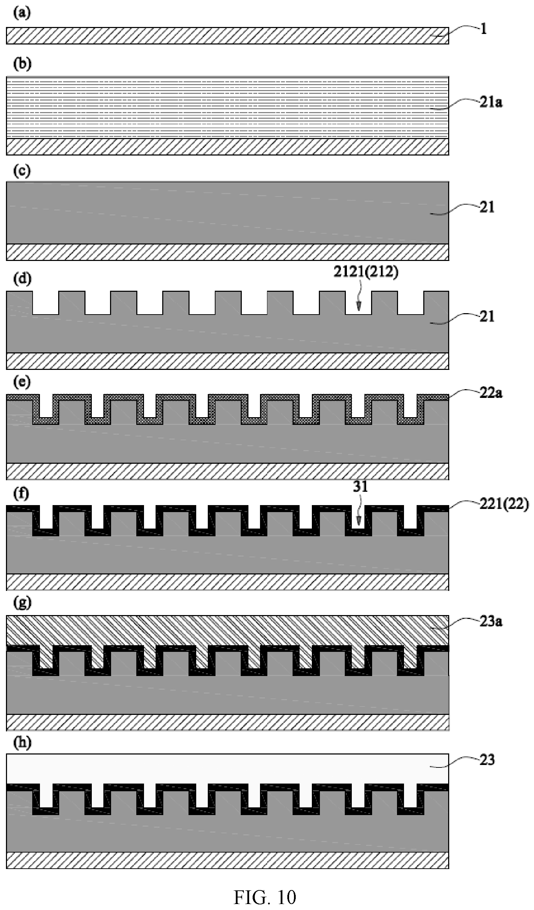

In a second aspect, referring to FIG. 10, an embodiment of the present application further provides a preparation method of a pole piece 10, including:
S01. preparing a first active material layer 21 on a current collector 1,wherein the first active material layer 21 has a first surface 211 away from the current collector 1, and a recess 212 extending from the first surface 211 to inside of the first active material layer 21 is formed on the first active material layer 21; and
S02. film-forming a first slurry on the first surface 211 and the recess 212 of the first active material layer 21 to obtain a liquid-absorbing layer 221.

The preparation method of the pole piece 10 provided in the embodiment of the present application is simple in process and convenient to implement. When the prepared pole piece 10 is applied to the battery 100, the pole piece 10 is easily soaked by the electrolyte in the battery 100, and the electrolyte can quickly penetrate into the inside of the pole piece 10 by means of the recess 212 and the liquid-absorbing layer 221 on the pole piece 10, thereby shortening the path of lithium ion transmission, reducing the concentration polarization inside the pole piece 10, and improving the rate capacity of the battery 100.

In some embodiments, referring to FIG. 10(a) to FIG. 10 (d) , in step S01, the step of preparing the first active material layer 21 on the current collector 1 includes:
S011. film-forming a second slurry on the current collector 1 to obtain the first active material layer 21; and
S012.locally etching the first active material layer 21 from a side of the first active material layer 21 away from the current collector by laser to obtain the recess 212.

By first preparing the first active material layer 21 and then laser etching the first active material layer 21 to obtain the recess 212, it is not only efficient, but also easy to control the shape and size of the recess 212.

In some embodiments, the recess 212 may also be formed simultaneously during the formation of the first active material layer 21. For example, the first active material layer 21 is prepared by double coating, and a recess 212, specifically a micropore, is formed on the first active material layer 21 during the forming of the first active material layer 21.

In some embodiments, referring to FIG. 10 (b) to FIG. 10 (c), in step S011, the step of film-forming the second slurry on the current collector 1 to obtain the first active material layer 21; including:
S0111. coating the second slurry on the current collector 1 to obtain a second wet film layer 21a, wherein the second slurry includes a first active material, a second adhesive, a second conductive agent, and a second solvent; and
S0112. drying the second wet film layer 21a to volatilize the second solvent to obtain the first active material layer 21.

The above-mentioned method for preparing the first active material layer 21 is simple and is advantageous for controlling the cost.

In some embodiments, during the preparation of the first active material layer 21, the second slurry is applied to the current collector 1 in a manner including, but not limited to, at least one of gravure coating, microgravure coating, spray coating, and electrostatic spinning techniques. The first active material, the second adhesive and the second conductive agent are described in the first aspect. The second solvent may be selected according to the type of pole piece 10 prepared. As an example, when the pole piece 10 is a positive pole piece, the second solvent includes N-methylpyrrolidone (NMP), and when the pole piece 10 is a negative pole piece, the second solvent includes water.

In some embodiments, drying the second wet film layer 21a may be by drying the second wet film layer 21a in an oven. When the pole piece 10 is a positive pole piece, the drying temperature may be 40°C to 150°C; and when the pole piece 10 is a negative pole piece, the drying temperature may be 20°C to 110°C.

In some embodiments, the first active material layer 21 may also be prepared by layered coating such that micropores are present in the prepared first active material layer 21 and the recess 212 includes the micropores.

In some embodiments, referring to FIG. 10 (e) to FIG. 10 (f), step S02 of film-forming the first slurry on the first surface 211 of the first active material layer 21 and the recess 212 to obtain the liquid-absorbing layer 221 includes:
S021. providing the first slurry including a first solvent, a first conductive agent, and a first adhesive;
S022. coating the first slurry to the first surface 211 and inner surfaces of the recess 212 to obtain the first wet film layer 22a; and
S023.drying the first wet film layer 22a to volatilize the first solvent to obtain the liquid-absorbing layer 221.

When the recess 212 is prepared by laser etching, floating powders (that is, residual micron-sized dust) are present on the surface of the first active material layer 21. The first slurry is further applied to the first surface 211 of the first active material layer 21 and the recess 212 to obtain the first wet film layer 22a, and the first slurry includes the first solvent, the first conductive agent, and the first adhesive. The first slurry has a certain fluidity as the wet material. In this process, the first wet film layer 22a not only covers the floating powders on the surface of the first active material layer 21, but also a small amount of the first slurry in the first wet film layer 22a penetrates into the first active material layer 21, after which the first slurry is dried to volatilize the first solvent and is solidified to form the liquid-absorbing layer 221. As such, the floating powders on the surface of the first active material layer 21 are also solidified in the interface region where the liquid-absorbing layer 221 is bonded to the first active material layer 21. This reduces the risk of dust leaving the pole piece 10 and entering the electrolyte, reduces the risk of the separator being adhered to by the dust, and further reduces the risk of circuit-short in the battery 100.

In some embodiments, the means of coating the first slurry on the first surface 211 and the recess 212 of the first active material layer 21 includes, but is not limited to, at least one of gravure coating, microgravure coating, spray coating, and electrostatic spinning techniques. Alternatively, the first solvent includes at least one of water, N-methylpyrrolidone, ethylene glycol, and isopropanol. Alternatively, the first adhesive includes at least one of carboxymethylcellulose (CMC), polyacrylic acid (PAA), polyvinylidene fluoride (PVDF), polytetrafluoroethylene (PTFE), and styrene-butadiene rubber (SBR). By way of example, the first conductive agent includes at least one of a conductive carbon material and a conductive ceramic. Alternatively, the conductive carbon material includes at least one of carbon black, carbon nanotubes, carbon fibers, acetylene black, graphite, and graphene. Alternatively, the carbon black includes at least one of conductive carbon black Super P, superconductive carbon black, and Ketjen black. Alternatively, the carbon nanotubes include at least one of single-walled carbon nanotubes (SWCNTs) and multi-walled carbon nanotubes (MWCNTs).

In some embodiments, the content of the first solvent in the first slurry is 10wt% to 97wt%. The content of the first solvent in the first slurry affects the forming effect of the first wet film layer 22a, thereby affecting the liquid-absorbing layer 221. In the first slurry, the content of the first solvent is too high to cause the first slurry to easily drip, and the first wet film layer 22a is difficult to form. The content of the first solvent is too low to cause the first slurry to flow insufficiently, and the uniformity and continuity of the first wet film layer 22a are affected. As an example, the content of the first solvent in the first slurry is 10wt%, 20wt%, 30wt%, 40wt%, 50wt%, 60wt%, 70wt%, 80wt%, 90wt%, 95wt% or 97wt%.

In some embodiments, the solid content of the first slurry is 3wt% to 90wt%. The solid content in the first slurry refers to the total content of other substances than the first solvent. The solid content in the first slurry is too high cause the first slurry to flow insufficiently, and the solid content in the first slurry is too low to easily drip. By way of example, the solid content in the first slurry is 3wt%, 5wt%, 10wt%, 20wt%, 30wt%, 40wt%, 50 t%, 60wt%, 70wt%, 80wt% or 90wt%.

In some embodiments, the viscosity of the first slurry is 10cp to 15000cp. The viscosity of the first slurry affects the thickness of the liquid-absorbing layer 221. The lower the viscosity of the first slurry, the easier to make the liquid-absorbing layer 221 thin. The higher the viscosity of the first slurry, the easier to make the liquid-absorbing layer 221 thick. As an example, the viscosity of the first slurry is 10cp, 100cp, 500cp, 1000cp, 2000cp, 3000cp, 5000cp, 8000cp, 10000cp, 12000cp, or 15000cp.

In some embodiments, the dispersant is also included in the first slurry. The dispersant is beneficial to improving the dispersing effect of the first conductive agent in the first solvent. Alternatively, the dispersant includes at least one of an anhydride, a polyvinylpyrrolidone (PVP), a sulfate salt, a sulfonate salt, poly (N-vinylacetamide) (PNVA), polyvinyl alcohol (PVA), and polyethylene glycol.

In some embodiments, based on the total mass of the first conductive agent, the first adhesive, and the dispersing agent, the contents of the first conductive agent, the first adhesive, and the dispersant are as follows: the first conductive agent of 1wt% to 60wt%, the first adhesive of 10wt% to 99wt%, and the dispersant of 0wt% to 30wt%. As an example, the content of the first conductive agent is 1wt%, 5wt%, 10wt%, 15wt%, 20wt%, 25wt%, 30wt%, 35wt%, 40wt%, 45wt%, 50wt%, 55wt% or 60wt%; the content of the first adhesive is 10wt%, 20wt%, 30wt%, 40wt%, 50wt%, 60wt%, 70wt%, 80wt%, 90wt% or 99wt%; and the content of the dispersant is 0wt%, 5wt%, 10wt%, 15wt%, 20wt%, 25wt% or 30wt%.

In some embodiments, the first slurry may be prepared by wet pulping. Specifically, the first solvent, the dispersant, and the first adhesive are prepared as glue soluting in a mixing apparatus, and then mixed by adding the first conductive agent to prepare the first slurry. Mixing apparatus includes, but is not limited to, a mixer, a ball mill, a high speed disperser, a mill, and the like. Certainly, in some embodiments, the first solvent and the first adhesive may also be used to prepare the glue soluting in the mixing apparatus, and then mixed by adding the first conductive agent and the dispersant to prepare the first slurry.

In some embodiments, the first slurry may also be prepared by dry pulping. Specifically, the first conductive agent, the first adhesive, and the dispersing agent are first mixed uniformly in the mixing apparatus, and then mixed by adding the first solvent to prepare the first slurry. Certainly, in some embodiments, the first adhesive and the first solvent may be prepared as an adhesive glue soluting, and then the first conductive agent and the dispersant are uniformly mixed in the mixing apparatus, and then mixed with the adhesive glue soluting to prepare the first slurry.

In some embodiments, the liquid-absorbing layer 221 is a conductive layer, and the first slurry includes the first solvent, the first conductive agent, and the first adhesive. As an example, the first wet film layer 22a may be dried in an oven at a drying temperature of 20°C to 130°C. As an example, the drying temperature is 20°C, 30° C, 40°C, 50°C, 60°C, 70°C, 80°C, 90°C, 100°C, 110°C, 120°C, or 130° C.

In some embodiments, referring to FIG. 10, the preparation method of the pole piece 10 further includes:
S03. preparing a second active material layer 23 on the surface of the liquid-absorbing layer 221.

In some embodiments, referring to FIG. 10(g) to FIG. 10(h), the preparation method of the second active material layer 23 includes:
S031. applying a third slurry to a side of the liquid-absorbing layer 221 away from the current collector 1 to obtain a third wet film layer 23a, wherein the third slurry includes a second active material, a third solvent, a third conductive agent, and a third adhesive; and
S032. drying the third wet film layer 23a to volatilize the third solvent to obtain a second active material layer.

In the process of preparing the second active material layer 23 described above, the third slurry is coated on the liquid-absorbing layer 221 in a manner including, but not limited to, at least one of gravure coating, microgravure coating, spraying, and electrostatic spinning techniques. The second active material, the third conductive agent and the third adhesive are described in the first aspect. The third solvent may be selected according to the type of pole piece 10 prepared. As an example, when the pole piece 10 is a positive pole piece, the third solvent includes N-methylpyrrolidone (NMP), and when the pole piece 10 is a negative pole piece, the third solvent includes water.

As an example, the third wet film layer 23a may be dried in an oven, and when the pole piece 10 is a positive pole piece, the drying temperature may be 40°C to 150°C; When the pole piece 10 is a negative pole piece, the drying temperature may be 20°C to 110°C.

In some embodiments, referring to FIG. 10, embodiments of the present application also provide a preparation method of a pole piece 10, including:
S1. preparing a first active material layer 21 on a current collector 1,wherein the first active material layer 21 has a first surface 211 away from the current collector 1;
S2, laser etching the first active material layer 21 to produce a laser etching portion 2121 extending from the first surface 211 to an inside of the first active material layer 21;
S3, providing a first slurry including a first adhesive and a first solvent;
S4. film-forming the first slurry on the first surface 211 and the laser etching section 2121 to obtain a first wet film layer 22a; and
S5. drying the first wet film layer 22a to volatilize the first solvent to obtain a protective layer 22.

In the embodiment of the present application, when the laser etching portion 2121 is prepared by means of laser etching, floating powders (that is, residual micron-sized dust) are present on the surface of the first active material layer 21. By providing the first wet film layer 22a on the first surface 211and the laser etching part 2121 of the first active material layer 21, the first wet film layer 22a includes a first slurry, and the first slurry includes a first solvent and a first adhesive, and the first slurry has certain fluidity as a wet material. In this way, the first wet film layer 22a not only covers the floating powders on the surface of the first active material layer 21, but also the first slurry in the first wet film layer 22a penetrates into the first active material layer 21 in a small amount, after which the first slurry is dried to volatilize the first solvent and is solidified to form the protective layer 22. The floating powders on the surface of the first active material layer 21 are also solidified in the interface region where the protective layer 22 is combined with the first active material layer 21, thereby reducing the risk of dust leaving from the pole piece 10 and entering the electrolyte, reducing the risk of the separator being adhered to the dust, thereby reducing the risk of circuit-short and self-discharge in the battery 100.

In some embodiments, refer to FIG. 10 (a), FIG. 10 (b), and FIG. 10 (c). Step S1 specifically includes:
S11. providing a second slurry including a first active material, a second adhesive, and a second solvent;
S12. film-forming the second slurry on the current collector 1 to obtain a second wet film layer 21a; and
S13. drying the second wet film layer 21a to volatilize the second solvent to obtain the first active material layer 21.

In brief, the process of preparing the first active material layer 21 on the current collector 1 includes: performing a film-forming process on the second slurry on the current collector 1 to obtain the second wet film layer 21a, and drying the second wet film layer 21a to obtain the first active material layer 21. The film-forming process herein includes, but is not limited to, at least one of gravure coating, microgravure coating, spray coating, and electrospinning techniques. The first active material and the second adhesive are described in the first aspect. The second solvent may be selected according to the type of pole piece 10 prepared. As an example, when the pole piece 10 is a positive pole piece, the second solvent includes N-methylpyrrolidone (NMP), and when the pole piece 10 is a negative pole piece, the second solvent includes water. Alternatively, the second slurry further includes the second conductive agent, the second conductive agent is as described in the first aspect. The drying process for the second wet film layer 21a may include drying the second wet film layer 21a in an oven. When the pole piece 10 is a positive pole piece, the drying temperature may be 40°C to 150°C. When the pole piece 10 is a negative pole piece, the drying temperature may be 20°C to 110°C.

In some embodiments, referring to FIG. 10 (d), the process of preparing the laser etching portion 2121 on the first active material layer 21 includes: locally irradiating the first active material layer 21 from the first surface 211 of the first active material layer 21 with the laser beam, so that the substance (including the first active material, the second conductive agent, the second adhesive, and the like) in the irradiated region on the first active material layer 21 is vaporized, the irradiated region on the first active material layer 21 by the laser beam is thinned in the thickness direction to form a recess, that is, the laser etching portion 2121. As an example, a laser engraving machine may be used to emit a laser beam, and the power of the laser etching in the laser etching process may be adjusted according to the type of the material to be etched, the size of the laser etching portion 2121 to be formed, and the like.

In some embodiments, referring to FIG. 10 (e) and FIG. 10 (f), the process of preparing the protective layer 22 on the first active material layer 21 includes: film-forming the first slurry on the first surface 211 of the first active material layer 21 and the laser etching portion 2121 to obtain the first wet film layer 22a, and drying the first wet film layer 22a to obtain the protective layer 22. Similarly, the methods of film-forming processing herein include, but are not limited to, at least one of gravure coating, microgravure coating, spray coating, and electrostatic spinning techniques. Alternatively, the first solvent includes at least one of water, N-methylpyrrolidone, ethylene glycol, and isopropanol. Alternatively, the first adhesive includes at least one of carboxymethylcellulose (CMC), polyacrylic acid (PAA), polyvinylidene fluoride (PVDF), polytetrafluoroethylene (PTFE), and styrene butadiene rubber (SBR).

In some embodiments, the first slurry further includes the first conductive agent and/or the third active material. By way of example, the first slurry further includes the first conductive agent, or the first slurry further includes the third active material, or the first slurry further includes the third active material and the first conductive agent. Alternatively, the first conductive agent includes at least one of a conductive carbon material and a conductive ceramic. Alternatively, the conductive carbon material includes at least one of carbon black, carbon nanotubes, carbon fibers, acetylene black, graphite, and graphene. Alternatively, the carbon black includes at least one of conductive carbon black Super P, superconductive carbon black, and Ketjen black. Alternatively, the carbon nanotubes include at least one of single-walled carbon nanotubes (SWCNTs) and multi-walled carbon nanotubes (MWCNTs).

In some embodiments, the content of the first solvent in the first slurry is 10wt% to 97wt%. The content of the first solvent in the first slurry affects the forming effect of the first wet film layer 22a, thereby affecting the protective layer 22. In the first slurry, the content of the first solvent is too high to cause the first slurry to easily drip, and the first wet film layer 22a is difficult to form. The content of the first solvent is too low to cause the first slurry to flow insufficiently, and the uniformity and continuity of the first wet film layer 22a are affected. As an example, the content of the first solvent in the first slurry is 10wt%, 20wt%, 30wt%, 40wt%, 50wt%, 60wt%, 70wt%, 80wt%, 90wt%, 95wt% or 97wt%.

In some embodiments, the solid content of the first slurry is 3wt% to 90wt%. The solid content in the first slurry refers to the total content of other substances than the first solvent. The solid content in the first slurry is too high cause the first slurry to flow insufficiently, and the solid content in the first slurry is too low to easily drip. By way of example, the solid content in the first slurry is 3wt%, 5wt%, 10wt%, 20wt%, 30wt%, 40wt%, 50 t%, 60wt%, 70wt%, 80wt% or 90wt%.

In some embodiments, the viscosity of the first slurry is 10cp to 15000cp. The viscosity of the first slurry affects the thickness of the protective layer 22. The lower the viscosity of the first slurry, the easier to make the protective layer 22 thin. The higher the viscosity of the first slurry, the easier to make the protective layer 22 thick. As an example, the viscosity of the first slurry is 10cp, 100cp, 500cp, 1000cp, 2000cp, 3000cp, 5000cp, 8000cp, 10000cp, 12000cp, or 15000cp.

In some embodiments, the dispersant and the first conductive agent are also included in the first slurry. The dispersant is beneficial to improving the dispersing effect of the first conductive agent in the first solvent. Alternatively, the dispersant includes at least one of an anhydride, a polyvinylpyrrolidone (PVP), a sulfate salt, a sulfonate salt, poly (N-vinylacetamide) (PNVA), polyvinyl alcohol (PVA), and polyethylene glycol.

In some embodiments, based on the total mass of the first conductive agent, the first adhesive, and the dispersing agent, the contents of the first conductive agent, the first adhesive, and the dispersant are as follows: the first conductive agent of 1wt% to 60wt%, the first adhesive of 10wt% to 99wt%, and the dispersant of 0wt% to 30wt%. As an example, the content of the first conductive agent is 1wt%, 5wt%, 10wt%, 15wt%, 20wt%, 25wt%, 30wt%, 35wt%, 40wt%, 45wt%, 50wt%, 55wt% or 60wt%; the content of the first adhesive is 10wt%, 20wt%, 30wt%, 40wt%, 50wt%, 60wt%, 70wt%, 80wt%, 90wt% or 99wt%; and the content of the dispersant is 0wt%, 5wt%, 10wt%, 15wt%, 20wt%, 25wt% or 30wt%.

In some embodiments, the first slurry may be prepared by wet pulping. Specifically, the first solvent, the dispersant, and the first adhesive are prepared as glue soluting in a mixing apparatus, and then mixed by adding the first conductive agent to prepare the first slurry. Mixing apparatus includes, but is not limited to, a mixer, a ball mill, a high speed disperser, a mill, and the like. Certainly, in some embodiments, the first solvent and the first adhesive may also be used to prepare the glue soluting in the mixing apparatus, and then mixed by adding the first conductive agent and the dispersant to prepare the first slurry.

In some embodiments, the first slurry may also be prepared by dry pulping. Specifically, the first conductive agent, the first adhesive, and the dispersing agent are first mixed uniformly in the mixing apparatus, and then mixed by adding the first solvent to prepare the first slurry. Certainly, in some embodiments, the first adhesive and the first solvent may be prepared as an adhesive glue soluting, and then the first conductive agent and the dispersant are uniformly mixed in the mixing apparatus, and then mixed with the adhesive glue soluting to prepare the first slurry.

In some embodiments, the first slurry includes the first solvent, the dispersant, the first conductive agent, and the first adhesive. Referring to FIG. 10 (e) and FIG. 10 (f), the drying process for the first wet film layer 22a may specifically include drying the first wet film layer 22a in an oven at a drying temperature of 20°C to 130°C. As an example, the drying temperature is 20°C, 30°C, 40°C, 50°C, 60°C, 70°C, 80°C, 90°C, 100°C, 110°C, 120°C, or 130°C.

In some embodiments, the first slurry includes the first solvent, the third active material, a dispersant, a first conductive agent, and a first adhesive. See the description of the first aspect for a third active material. Referring to FIG. 10 (e) and FIG. 10 (f), the drying process for the first wet film layer 22a may include drying the first wet film layer 22a in an oven. When the pole piece 10 is a positive pole piece, the drying temperature may be 40°C to 150°C. When the pole piece 10 is a negative pole piece, the drying temperature may be 20°C to 110°C.

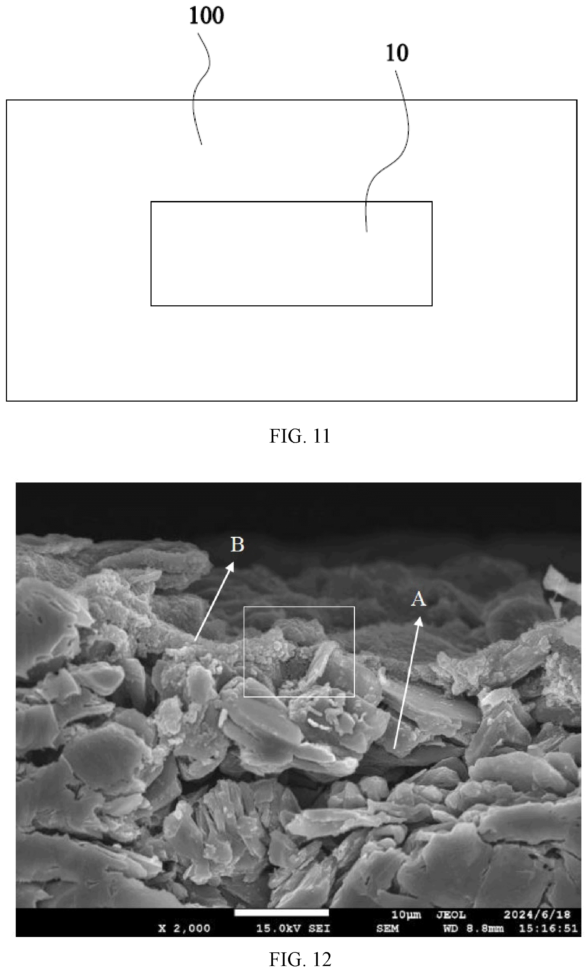

In a third aspect, referring to FIG. 11, an embodiment of the present application further provides a battery 100 including the pole piece 10 as described above.

The following description is made in connection with specific examples.

### Example 1

S1. preparing an electrode slurry (dry mixing): first, mixing an adhesive CMC of 12g and water of 738g to prepare a glue soluting; and then grounding and mixing an active graphite of 960g and a conductive carbon black Super P (SP) as the conductive agent of 13g; and after grounding and mixing, adding the glue soluting of 487.5g and water of 203.3 into to blend, and finally adding the SBR of 37.5g into to obtain the electrode slurry with the solid content of 45.5wt%; wherein the current collector is made of copper foil and has a thickness of 6µm.

S2. preparing an active material layer: coating an electrode slurry on a current collector by a slot-die coating method, drying a pole piece by an oven, and solidifying the electrode slurry to form an active material layer, and performing rolling treatment;

S3, etching a groove: etching the groove on the active material layer by laser, wherein the power of the laser etching is 10w;

S4. preparing a conductive slurry: grounding and mixing a conductive carbon black of 58g, CMC+SBR of 30g, and PVP of 12g, and adding the same into water of 85g, to prepare the conductive slurry having a viscosity of 71cp; and

S5. preparing a conductive layer: coating the conductive slurry on the active material layer obtained in step S3 by gravure coating, drying the electrode by the oven, and curing the conductive slurry to form the conductive layer.

### Example 2

The difference from Example 1 is only in S4: preparing a conductive slurry: grounding and mixing a conductive carbon black of 62g, CMC+SBR of 28g, and PVP of 10g, and adding the same water of 83g, to prepare the conductive slurry having a viscosity of 76cp.

### Example 3

The difference from Example 1 is only in S4: preparing a conductive slurry: grounding and mixing a conductive carbon black of 66g, CMC+SBR of 26g, and PVP of 8g, and adding the same into water of 80g, to prepare the conductive slurry having a viscosity of 74cp.

### Example 4

The difference from Example 2 is only that the amount of water in S4 is 87g, and the viscosity of the prepared conductive slurry is 63cp.

### Example 5

The difference from Example 2 is only that the amount of water in S4 is 82g and the viscosity of the prepared conductive slurry is 75cp.

### Example 6

The difference from Example 2 is only that the amount of water in S4 is 76g, and the viscosity of the prepared conductive slurry is 89cp.

### Example 7

The difference from Example 1 is only in S4: preparing a conductive slurry: grounding and mixing a conductive carbon black of 30g, PAA of 5g, and PVP of 5g, and adding the same into water of 88g, to prepare the conductive slurry having a viscosity of 25cp.

### Example 8

The difference from Example 7 is only that the amount of water in S4 is 75g, and the viscosity of the prepared conductive slurry is 120cp.

### Example 9

The only difference from Example 8 is that the conductive carbon black is replaced with acetylene black in S4.

### Comparative Example 1

The difference from Example 1 is only that there are no steps S4 and S5.

The formulations of the conductive slurries in each of the above examples are described in Table 1.

**Table 1**

| Group | Conductive agent | | Adhesive | | Dispersant | | Solvent | | Slurry viscosity/ cp |
|---|---|---|---|---|---|---|---|---|---|
| | Substance | Amount /g | Substance | Amount /g | Substance | Amount /g | Substance | Amount /g | |
| Example 1 | Conductive carbon black | 58 | CMC+SBR | 30 | PVP | 12 | Water | 85 | 71 |
| Example 2 | | 62 | | 28 | | 10 | | 83 | 76 |
| Example 3 | | 66 | | 26 | | 8 | | 80 | 74 |
| Example 4 | | 62 | | 28 | | 10 | | 87 | 63 |
| Example 5 | | 62 | | 28 | | 10 | | 82 | 75 |
| Example 6 | | 62 | | 28 | | 10 | | 76 | 89 |
| Example 7 | | 30 | PAA | 5 | | 5 | | 88 | 29 |
| Example 8 | | 30 | | 5 | | 5 | | 75 | 120 |
| Example 9 | Acetylene black | 30 | | 5 | | 5 | | 75 | 120 |
| Comparative Example 1 | No | | | | | | | | |

The pole piece samples provided in Examples 1 to 9 and Comparative Example 1 are characterized as follows:
1. The thickness of the conductive layers in the pole piece samples provided in Examples 1 to 8 and Comparative Example 1 is measured by: measuring the thickness of the sample before and after the conductive layer is coated by a micrometer, taking the difference value to obtain the thickness of the conductive layer. The results are recorded in Table 2. From the results in Table 2, it can be seen that when the viscosity of the conductive slurry is close (Examples 1 to 3 and Example 5), the thickness of the obtained conductive layer is close, while the thickness of the conductive layer increases as the solid content in the conductive slurry increases and the viscosity increases (Examples 4, 2, 5 and 6).

**Table 2**

| Group | thickness of conductive layer /µm |
|---|---|
| Example 1 | 1.45 |
| Example 2 | 1.45 |
| Example 3 | 1.45 |
| Example 4 | 0.85 |
| Example 5 | 1.50 |
| Example 6 | 2.60 |
| Example 7 | 0.6 |
| Example 8 | 3.15 |
| Comparative Example 1 | 0 |

2. Morphology characterization: the cross section of the pole piece is cut by using an argon ion precision cutting method to obtain a flat cross section, and then the morphology of cross section is observed by using a scanning electron microscope (SEM) and the thickness of the conductive layer is measured.

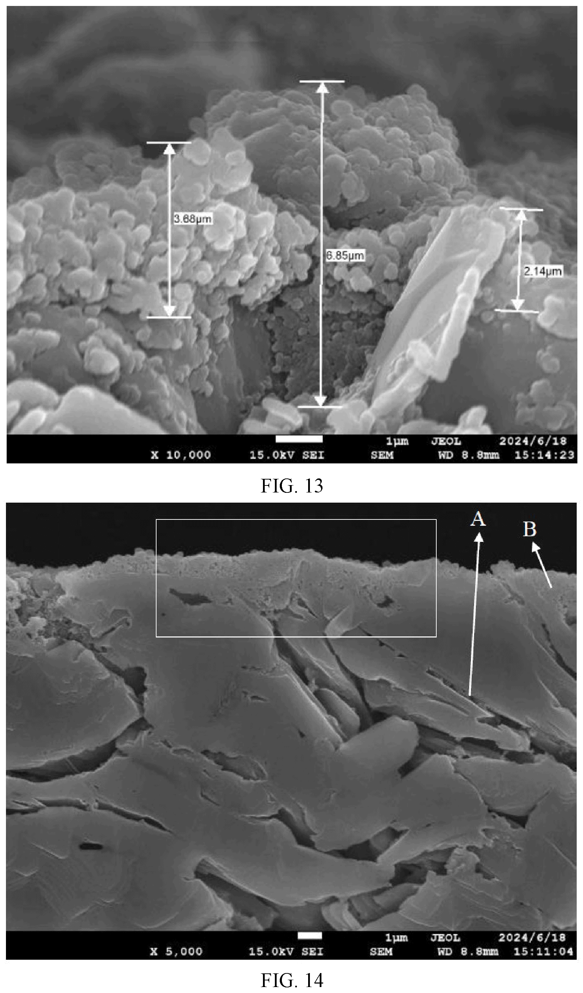

As shown in FIGS. 12 and 13, which are SEM images of the pole pieces provided in Example 8 at different magnification, it can be seen that the conductive layer covers the surface of the active material layer and fills the groove on the active material layer, the average thickness of the portion of the conductive layer covering the surface of the active material layer is 2.91µm, and the thickness of the portion of the conductive layer filling the groove is 6.85µm.

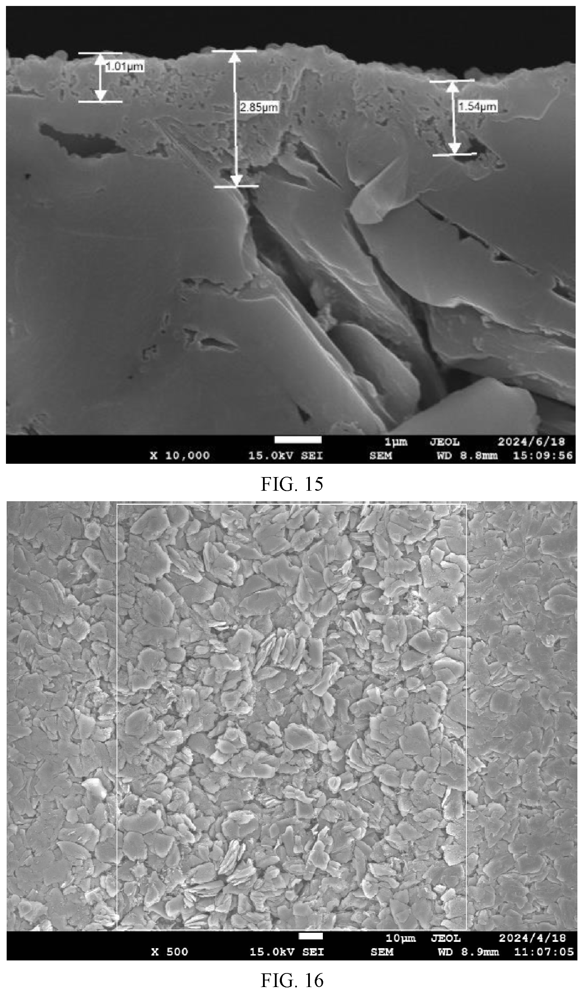

As shown in FIGS. 14 and 15, which are SEM images of the pole pieces provided in Example 1 at different magnification, it can be seen that the conductive layer also the surface of the active material layer and fills the groove on the active material layer, the average thickness of the portion of the conductive layer covering the surface of the active material layer is 1.275µm, and the thickness of the portion of the conductive layer filling the groove is 2.85µm.

As shown in FIG. 16, which is an SEM image of the pole piece provided in Comparative Example 1, an area circled by a frame is an area in which the active material layer is etched. It can be seen that particles in the area in which the surface of the pole piece is etched are relatively loose, because when the active material layer is etched by a high-energy laser, the adhesive is carbonized, and the active material and the conductive agent in the active material layer are loosened to generate micron-sized dust.

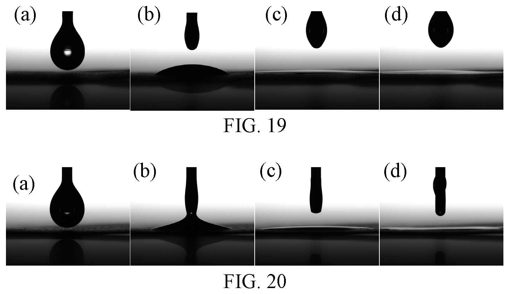

3. The time of diffusion of the electrolyte of 1mol/L LiPF₆ (solvent volume ratio EC:DMC:EMC=1:1:1) on the pole piece is measured by using a contact angle meter, and the process pictures are recorded with a high-speed camera. Specifically, the pole pieces provided in Example 8 and Comparative Example 1 are tested separately, and three different positions are selected for each pole piece to be tested separately, and the time from the electrolyte dripping to the surface of the pole piece to the electrolyte being completely absorbed by the surface of the pole piece (the contact angle is no longer changed) is recorded. The average value of the times tested by three times as the time of the electrolyte diffusing on the pole piece, and the results are recorded in Table 3. As can be seen from the data in Table 3, the time for the electrolyte to diffuse over the active material layer is 28.583s, while the time for the electrolyte to diffuse over the conductive layer is 12.173s, indicating that the conductive layer can better soak the electrolyte and that the conductive layer can accelerate the permeation rate of the electrolyte in the pole piece and reduce the concentration polarization inside the pole piece. Meanwhile, pictures of the pole pieces provided in Example 8 and Comparative Example 1 during contact angle test are recorded by using a high-speed camera, and the results are as shown in FIG. 19 (a) to FIG. 19 (d) and FIG. 20 (a) to FIG. 20 (d).

**Table 3**

| Group | Time/s | Average value /s |
|---|---|---|
| Example 1 | 15.092 | 12.173 |
| | 7.65 | |
| | 13.776 | |
| Comparative Example 1 | 27.566 | 28.583 |
| | 28.436 | |
| | 29.748 | |

### 4. Pole piece surface cleanliness test:

4.1 For Example 8, the cleanliness of the surface of the sample at different stages of preparation of the pole piece is examined by: wiping the surface of the pole piece with a clean latex glove and observing the fouling of the position where the latex glove contacts the pole piece, as shown in FIG. 17. FIG. 17 (a) is a photograph of the surface cleanliness test of the sample (i.e., the sample before etching of the active material layer) provided in step S2. It can be seen from the photograph that no obvious stains are found on the latex gloves at the position where the active material layer is contacted, indicating that the active material layer has very little floating powders before etching. FIG. 17 (b) is a photograph of the surface cleanliness test of the sample (i.e., the sample after etching of the active material layer) provided in step S3. From the photograph, it can be seen that there are obvious black stains on the latex gloves at the position where the active material layer is contacted, indicating that the active material layer has heavy floating powders after etching. FIG. 17 (c) is a photograph of the surface cleanliness test of the sample provided in step S5 (that is, the sample after the conductive layer is covered on the active material layer). It can be seen from the photograph that no obvious stains are found on the latex gloves where the conductive layer is contacted, indicating that the floating powders on the surface of the pole piece are reduced after the conductive layer is covered on the active material layer.

4.2. The pole pieces provided in Example 8 and Comparative Example 1 are respectively separated from the separator after being wound, and the cleanliness of the surface of the separator is observed, as shown in FIG. 18 (a) to FIG. 18 (c). As can be seen from FIG. 18 (a) to FIG. 18 (c), there is a significant black stain on the surface of the separator wound with the pole piece provided in Comparative Example 1, while the surface of the separator wound with the pole piece provided in Example 8 is relatively clean, indicating that the active material layer has heavy floating powders after laser etching, and that the floating powders are significantly reduced after the active material layer etched by the laser is covered with the conductive layer.

### 5. Rate capacity test:

5.1. Preparation of a battery: batteries (referred to as a No. 1 battery and a No. 2 battery, respectively) are prepared by taking the pole pieces provided in Example 8 and Comparative Example 1 as negative electrodes, respectively. The positive electrode, the separator and the electrolyte of each battery is the same, wherein the active material layer of the positive electrodes includes lithium cobalt oxide (97.6wt%), PVDF (1.3wt%) and SP (1.1wt%), the separator is polyethylene separator, and the electrolyte is a LiPF₆ electrolyte of 1mol/L (solvent volume ratio EC:DMC:EMC=1:1:1).

5.2. The prepared batteries are tested for rate capacity according to the following test methods:
(1) holding for 3 min;
(2) charging with constant-current and constant-voltage: charging at 0.2C to 4.47V, 0.02C off;
(3) holding for 5 min;
(4) discharging with constant current: discharging to 2.75V at different tested rates of 0.2C, 0.5C, 1C, 1.5C, and 2C;
(5) holding for 5 min;
(6) at the end of the test, obtaining the capacity of the battery; and
(7) comparing the battery capacity obtained at different tested rates with the battery capacity obtained at the tested rate of 0.2C to obtain capacity retention rates at different tested rates, and recording the results in Table 4.

**Table 4**

| Group | 0.2C discharge | 0.5C discharge | 1C discharge | 1.5C discharge | 2C discharge |
|---|---|---|---|---|---|
| Example 8 | 100% | 97.6% | 95.5% | 92.4% | 74.5% |
| Comparative Example 1 | 100% | 97.7% | 94.2% | 82.9% | 63.2% |

From the results of Table 4, it can be seen that at low magnification (0.2C, 0.5C), the capacity retention of the No. 1 battery prepared by the pole piece provided in Example 8 is similar to that of the No. 2 battery prepared by the pole piece provided in Comparative Example 1. As the magnification increased, the capacity retention of the No. 1 battery is higher than that of the No. 2 battery, and especially at high magnification (1.5C, 2C), the capacity retention of the No. 1 battery is significantly higher than that of the No. 2 battery, indicating that the provision of the conductive layer can significantly improve the rate capacity of the battery at magnification.

### 6. K value test:

6.1 Preparation of a battery: batteries are prepared by taking the pole pieces provided in Example 8, Example 9 and Comparative Example 1 as negative electrodes, respectively. The positive electrode, the separator and the electrolyte of each battery are the same. The active material layer of the positive electrode includes lithium cobalt oxide (97.6wt%), PVDF (1.3wt%) and SP (1.1wt%). The separator is a polyethylene separator. The electrolyte is a LiPF₆ electrolyte of 1mol/L (solvent volume ratio EC:DMC:EMC=1:1:1).

6.2. The K values of the prepared batteries are tested according to the following method: testing OCV1 of the battery after capacity grading and offline and being stand for 96±4h at normal temperature to obtain the voltage U1, and then testing OCV2 of the battery after further being stand for 48±4h (interval time t) at normal temperature to obtain the voltage U2, and calculating the K value by (U1-U2)/t. The test results are recorded in Table 5.

**Table 5**

| Group | K value |
|---|---|
| Example 8 | 0.0422 mV/h |
| Example 9 | 0.0225 mV/h |
| Comparative Example 1 | 0.0925 mV/h |

The K value of the battery refers to a voltage drop per unit time, usually denoted by mV/h, used to measure the self-discharge rate of the lithium battery.

From the results of Table 5, it can be seen that the K values of Examples 8 and 9 are significantly reduced compared to Comparative Example 1, indicating that the addition of a conductive layer (i.e., a protective layer) to the pole piece after laser etching can cover the floating powders, to reduce the risk of the floating powders entering the electrolyte and the separator, thereby significantly reducing the K value of the battery (herein, the core).

## Claims

1. A pole piece, comprising:
a current collector; and
a composite layer disposed on the current collector, wherein the composite layer comprises a first active material layer, the first active material layer has a first surface away from the current collector, and a recess extending from the first surface to inside of the first active material layer is defined on the first active material layer.

2. The pole piece according to claim 1, wherein the composite layer further comprises a protective layer, the first active material layer and the protective layer are sequentially disposed in a direction away from the current collector, and the protective layer covers the first surface and an inner surface of the recess.

3. The pole piece according to claim 2, wherein the protective layer is a liquidabsorbing layer.

4. The pole piece according to claim 2 or 3, wherein the protective layer comprises a first adhesive.

5. The pole piece according to claim 4, wherein the recess is a laser etching portion .

6. The pole piece according to claim 5, wherein the protective layer accommodates the laser etching portion to define a receiving groove, a notch of the receiving groove is located on a side of the protective layer away from the first active material layer.

7. The pole piece according to claim 4, wherein the protective layer further comprises a first conductive agent.

8. The pole piece according to claim 7, wherein the protective layer has a superior capacity to absorb electrolyte than the first active material layer.

9. The pole piece according to claim 8, wherein a porosity of the protective layer is greater than a porosity of the first active material layer; or,
the first active material layer comprises a first active material, an oil-absorbing value of the first conductive agent is greater than an oil-absorbing value of the first active material; or,
the first active material layer further comprises a second conductive agent, a mass content of the first conductive agent in the protective layer is greater than a mass content of the second conductive agent in the first active material layer; or,
the first active material layer comprises a first active material, a content of the first active material in the first active material layer is greater than 50wt%, and a total mass percentage of the first conductive agent in the protective layer is greater than 50wt%; or,
the protective layer comprises the first conductive agent of 1wt% to 80wt%, the first adhesive of 10wt% to 99wt%, and a dispersant of 0wt% to 30wt%.

10. The pole piece according to claim 7, wherein the first conductive agent comprises at least one of a conductive carbon material and a conductive ceramic.

11. The pole piece according to claim 10, wherein the conductive carbon material comprises at least one of carbon black, carbon nanotubes, carbon fibers, acetylene black, graphite, and graphene.

12. The pole piece according to claim 7, wherein the first conductive agent has a specific surface area of 1m²/g to 1000m²/g; and/or the first conductive agent has a D50 particle size of 1nm to 50µm; and/or the first conductive agent has an oil-absorbing value greater than or equal to 500mL/100g; and/or the first conductive agent has a conductivity of 3000S·cm to 12000S·cm.

13. The pole piece according to claim 1, wherein the recess includes at least one of a groove and a through-hole.

14. The pole piece according to claim 1, wherein a width of the recess is not changed or is decreased in a direction close to the current collector.

15. The pole piece according to claim 1, wherein a plurality of recesses is provided, the plurality of recesses is spaced apart, and a spacing between two adjacent recesses of the plurality of recesses ranges from 0.01mm to 100mm; and/or a depth of the recess is less than a thickness of the first active material layer; and/or an average width of the recess ranges from 1µm to 300µm; and/or the thickness of the first active material layer is greater than 30µm; and/or a thickness of the pole piece is greater than 60µm.

16. The pole piece according to claim 4, wherein the first active material layer further comprises a second conductive agent, a content of the second conductive agent in the first active material layer increases in a direction close to the current collector; and/or the first active material is a first active material particle, an average particle size of the first active material particle in the first active material layer increases in the direction close to the current collector; and/or the composite layer further comprises a second active material layer disposed on a surface of the protective layer and facing away from the first active material layer; and/or, a plurality of composite layers is provided on a single side of the current collector, the plurality of composite layers is laminated.

17. A preparation method of a pole piece, comprising:
preparing a first active material layer on a current collector, wherein the first active material layer has a first surface away from the current collector, and a recess extending from the first surface to inside of the first active material layer is defined on the first active material layer.

18. The preparation method of the pole piece according to claim 17, further comprising:
film-forming a first slurry on the first surface of the first active material layer and the recess to obtain a protective layer.

19. The preparation method of the pole piece according to claim 17, wherein the preparing the first active material layer on the current collector comprises:
film-forming a second slurry on the current collector to obtain the first active material layer; and
locally etching the first active material layer from a side of the first active material layer away from the current collector by laser to obtain the recess.

20. A battery, comprising the pole piece according to any one of claims 1 to 16 or the pole piece prepared by the preparation method of the pole piece according to any one of claims 17 to 19.
